# EUROPEAN PATENT APPLICATION

(11) **EP 2 003 576 A1**
(43) Date of publication of application: **17.12.2008**
(21) Application number: 08100122.4
(22) Date of filing: 04.01.2008
(51) Int. Cl.: G06F 17/30

(54) **Document management method and apparatus**

(30) Priority: 06.06.2007 JP 2007150775
(71) Applicant: Canon Kabushiki Kaisha, Ohta-Ku, Tokyo 146-8501 (JP)
(72) Inventor: Tamura, Makiya Canon Kabushiki Kaisha, Ohta-ku Tokyo (JP)
(74) Representative: Sharp, Alan Cooper

(57) **Abstract**

An electronic file accessible from terminals through a network is stored in folders having a hierarchical structure as a document and managed. When a document or folder in a folder is moved or deleted, the history of moving or deleting the document or folder is held (410). When one of the terminals opens a folder, the history of operation of a document or lower level folder once stored in the opened folder is displayed (700, 800) on the terminal that has opened the folder, based on the history of moving or deleting. A document processing method and apparatus in a document processing system allows a user to know the movement destination folder or deletion state of a document or folder by only opening a folder once storing the document or folder before moving or deleting, even if the document or folder was moved or deleted in the opened folder.

## Description

### BACKGROUND OF THE INVENTION

### Field of the Invention

The present invention relates to a document management method and apparatus and, more particularly, to a document management method and apparatus for managing change or deletion of storage locations in which folders or documents are stored in a document management system capable of controlling an access of a folder or document by a plurality of users. The document management system assigns a unique identifier to each document or folder and manages data in a hierarchical structure that defines a folder as a node and a document as a leaf node.

### Description of the Related Art

Recent improvement of network technologies and spread of networks are making it common for a plurality of users to perform an operation of a certain kind while sharing electronic files on a network. The users can share electronic files using the basic function of an operating system such as UNIX® or Windows®. In Windows®, the users can easily share and manage electronic files managed by the file system on the operating system using a graphical user interface (GUI) such as Explorer.

Some document management systems enable sharing and management of electronic files under a higher level of security for use in a corporation or for use in a specific service without using the mentioned basic function of an operating system. There are also more user-friendly document management systems that enable sharing and management of electronic files.

In using the document management system for sharing and management of electronic files, a user executes the following operations:
(Operation 1) The user creates a folder in the document management system;
(Operation 2) The user registers a document
(electronic file) in an arbitrary folder in the document management system;
(Operation 3) The user executes a moving operation of an arbitrary folder or document managed in the document management system and changes the storage location; (Operation 4) The user edits and updates an arbitrary document managed in the document management system; and
(Operation 5) The user executes a deleting operation of an arbitrary folder or document managed in the document management system to delete the registered folder or document from the document management system.

The document management system is normally used by a plurality of users to share documents and therefore has the following problems.

If a user moves an arbitrary folder or document at an arbitrary timing, another user who has attempted to access the desired document or folder after it has been moved cannot determine whether the reason for its nonexistence is the result of movement or deletion. Even when the user guesses that the desired document has been moved, he/she cannot determine the movement destination folder. Similarly, if a user deletes an arbitrary folder or document at an arbitrary timing, another user who attempts to access the desired document or folder after it has been deleted cannot determine whether the reason for its nonexistence is the result of movement or deletion.

For example, assume that a user A accesses a folder F and moves a document D stored in the folder F to a folder F'. When a user B accesses the folder F to edit the document D in this state, the document D that should exist in the folder F is not present in the folder F because it has been moved. The user B must find the document D by using, for example, the document search function of the document management system or by accessing appropriate folders at random. This operation requires time and effort of the user and gives a heavy burden to the user B who must search for the new storage location of the desired document or folder again.

To solve the above problem, Japanese Patent Laid-Open Nos. 2001-357051 and 10-133934 have been proposed. These published arts allow a user to access a moved document using its URL or identifier assigned before movement. However, both techniques assume that the user knows the URL or identifier assigned to the accessed document. Hence, if the user doesn't know the URL or the identifier, the user cannot know the presence of a folder or document until he/she accesses a folder to which it has been moved. Similarly, when a folder or document is deleted, the user cannot know that it is deleted until he/she fails to access the folder or document itself.

In the environment where the user uses the document management system, however, he/she opens a folder storing a document and accesses the document in the folder in many cases rather than directly designating a document in a folder and accessing the document. More specifically, believing that "the document D is stored in the folder F", the user uses the document management system by (1) opening the folder F to display a document list of the folder F and (2) selecting the document D from the document list.

Hence, if a document or folder is moved or deleted in the document management system, the system is required to be able to inform the user of information after the operation of movement or deletion. For example, when the user accesses the folder in which the document or folder was once stored, it is preferable to notify the user of the new storage location of the moved document or folder or of the deletion of the document or folder.

On the other hand, from the viewpoint of security against information leakage, it is not always preferable to disclose the user information such as the new storage location of the moved document or the deletion of the document. Hence, it is preferable to enable control depending on the accessing user whether or not to disclose such information.

### SUMMARY OF THE INVENTION

The present invention has been made in consideration of the above-described conventional problems and provides a document processing method and apparatus in a document processing system which, even if a document or folder has been moved or deleted, allows a user to know the movement destination folder or the deletion state of the document or folder when the user accesses a folder in which the document or folder had been stored before the operation of movement or deletion. The present invention also provides a document processing method and apparatus in a document processing system capable of controlling whether or not to disclose the movement destination folder or the deletion state of the document or folder.

The present invention in its first aspect provides a document management apparatus as specified in claims 1 to 10.

The present invention in its second aspect provides a document management system as specified in claim 11.

The present invention in its third aspect provides a document management method as specified in claims 12 to 16.

The present invention in its fourth aspect provides a program as specified in claim 17.

The present invention in its fifth aspect provides a computer-readable storage medium as specified in claim 18.

The present invention can provide a document processing method and apparatus in a document processing system which, even if a document or folder has been moved or deleted, allows a user to know the movement destination folder or the deletion state of the document or folder, when the user accesses a folder in which the document or folder had been stored before the operation of movement or deletion. The present invention can also provide a document processing method and apparatus in a document processing system capable of controlling whether or not to disclose the movement destination folder or the deletion state of the document or folder.

That is, in a document management system, even when a document or folder stored in a folder has been moved, the current storage location information can be presented to the user. Even when a document or folder stored in a folder is deleted, information representing that the document or folder has been deleted can be presented to the user. Hence, the user is rarely surprised to find the nonexistence of a desired document in a folder, when he/she has accessed the desired document in the folder in the belief that the document exists in the folder, because he/she can be notified the information of the movement or deletion.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a view showing an arrangement example of a document management system according to an embodiment;

Fig. 2 is a block diagram showing a detailed arrangement of a document management server and client terminal 101-X according to the embodiment;

Fig. 3A is a view for explaining a detailed example of document management in the document management server according to the embodiment;

Fig. 3B is a view showing a structural example of document management shown in Fig. 3A;

Fig. 4A is a view showing an example of a document storage location information management unit in the document management server according to the first embodiment;

Fig. 4B is a flowchart illustrating an example of a folder list display procedure in the document management server according to the first embodiment;

Fig. 5 is a flowchart illustrating a process procedure of registering and managing document storage location information in document movement according to the first embodiment;

Fig. 6A is a view for explaining a detailed example of document data movement on the document management server in document movement according to the first embodiment;

Fig. 6B is a view for explaining a detailed example of data registered in a document storage location information management table in document data movement on the document management server shown in Fig. 6A;

Fig. 7 is a view showing a display example of storage location information in a movement source folder in document movement shown in Fig. 6A;

Fig. 8 is a view showing a display example of storage location information in a movement source folder in document movement shown in Fig. 6A;

Fig. 9 is a flowchart illustrating a process procedure of registering and managing document storage location information in document deletion according to the first embodiment;

Fig. 10A is a view for explaining a detailed example of document data deletion on the document management server in document deletion according to the first embodiment;

Fig. 10B is a view for explaining a detailed example of data registered in a document storage location information management table in document data deletion on the document management server shown in Fig. 10A;

Fig. 11 is a view showing a display example of storage location information in a storage destination folder in document deletion shown in Fig. 10A;

Fig. 12 is a flowchart illustrating an example of a process procedure of registering and managing document storage location information in folder movement according to the first embodiment;

Fig. 13A is a view for explaining a detailed example of folder and document data movement on the document management server in folder movement according to the first embodiment;

Fig. 13B is a view for explaining a detailed example of data registered in a document storage location information management table in folder and document data movement on the document management server shown in Fig. 13A;

Fig. 14 is a view showing a display example of storage location information in a movement destination folder in folder movement shown in Fig. 13A;

Fig. 15 is a flowchart illustrating an example of a process procedure of registering and managing document storage location information in folder deletion according to the first embodiment;

Fig. 16A is a view for explaining a detailed example of folder and document data deletion on the document management server in folder deletion according to the first embodiment;

Fig. 16B is a view for explaining a detailed example of data registered in the document storage location information management table in folder and document data deletion on the document management server shown in Fig. 16A;

Fig. 17 is a view showing a display example of storage location information in a storage destination folder in folder deletion shown in Fig. 16A;

Fig. 18 is a view showing a document storage location information access management unit which manages access to document storage location information in a document management server according to the second embodiment;

Fig. 19 is a flowchart illustrating an example of a process procedure of displaying information when document storage location information access management according to the second embodiment is done;

Fig. 20 is a view showing an example of information display for a user having an access right when document storage location information access management in Fig. 19 is done;

Fig. 21 is a view showing an example of information display for a user having no access right when document storage location information access management in Fig. 19 is done;

Fig. 22 is a view showing a document storage location information clear management unit which clears (resets) document storage location information in a document management server according to the third embodiment; and

Fig. 23 is a flowchart illustrating an example of a process procedure of clearing (resetting) document storage location information according to the third embodiment.

### DETAILED DESCRIPTION OF THE EMBODIMENTS

The embodiments of a document management system to which the present invention is applicable will be described below with reference to the accompanying drawings.

### [First Embodiment]

### <Arrangement Example of Document Management System of This Embodiment>

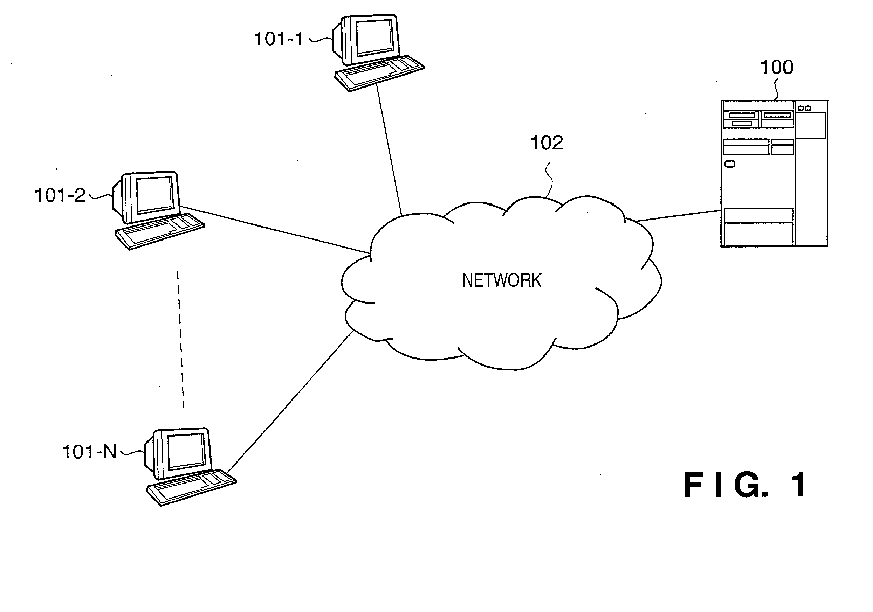

Fig. 1 is a view showing an arrangement example of a document management system to which the present invention is applicable.

As shown in Fig. 1, a document management server 100 corresponding to a document management apparatus and a plurality of client terminals 101-1, 101-2,..., 101-N such as PCs are connected through a network 102. The network 102 can be the Internet, Intranet or any other network system. For the descriptive convenience, an arbitrary one of the plurality of client terminals 101-1, 101-2,..., 101-N is expressed as a client terminal 101-X.

The document management system of this embodiment enables the client terminal 101-X to register an electronic file as a document in the document management server 100 or to delete an electronic file from the document management server 100 and also to execute an operation of, for example, searching for a registered document. The document management server 100 creates a folder and stores documents in the folder. That is, the document management server 100 can hierarchically manage documents by defining a folder as a node and a document as a leaf node. This is the same as in the file system of an operating system such as Windows® or UNIX®.

### <Arrangement Example of Document Management Server and Client Terminal of This Embodiment>

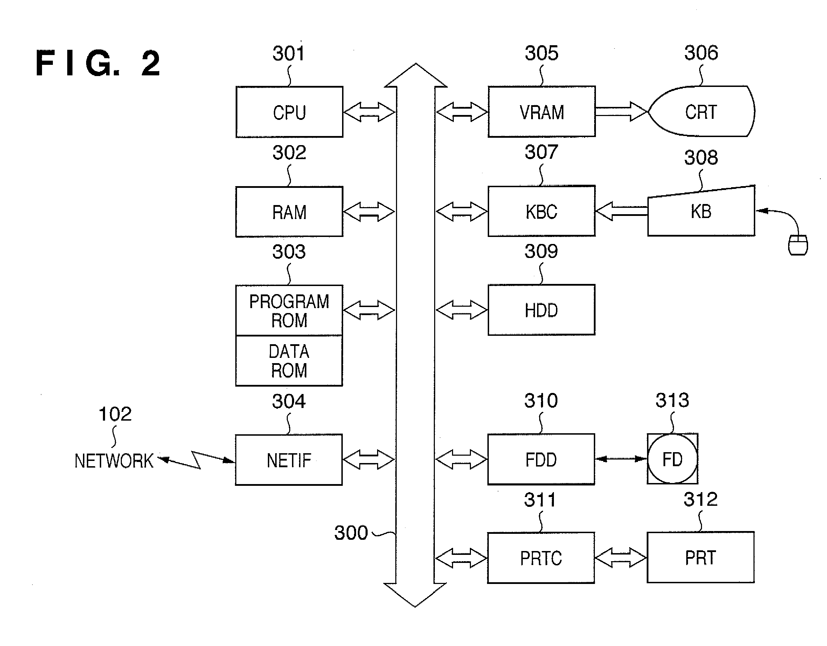

Fig. 2 is a block diagram showing a detailed arrangement of the document management server 100 and client terminal 101-X.

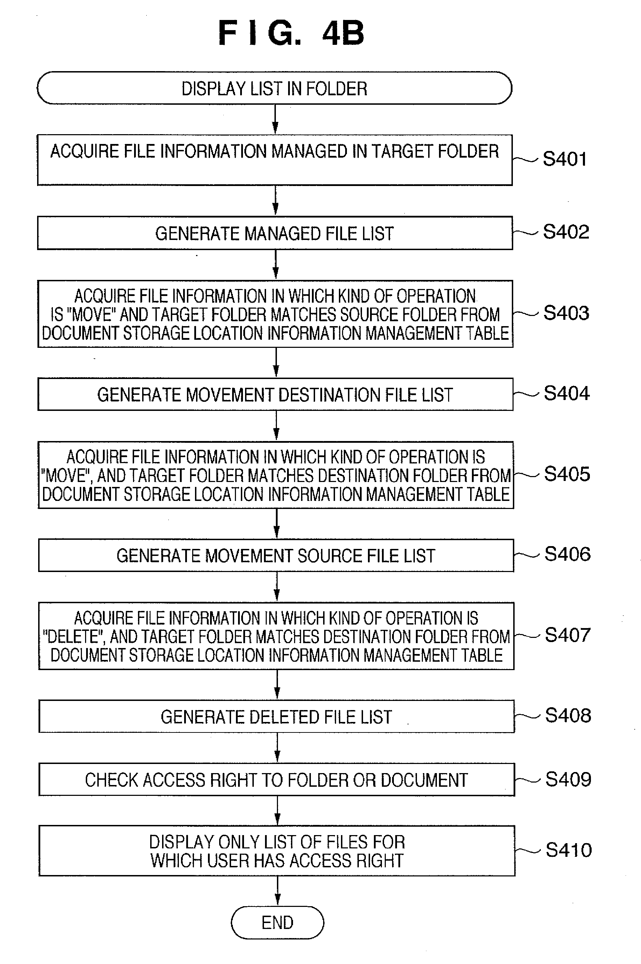

Referring to Fig. 2, a central processing unit (to be referred to as a CPU hereinafter) 301 executes processes and control of an information processing apparatus in accordance with a computer program. A random access memory (to be referred to as a RAM hereinafter) 302 serves as the main memory of the CPU 301 and functions as an execution area of programs and a data area to make the CPU 301 function as various means for executing the processes of the present invention. Various application programs to be executed by the CPU 301 are installed on the hard disk drive (HDD) 309 (described later), and when execution of such a program is instructed, the program is loaded to the RAM 302 and executed under the control of the CPU 301, so that steps illustrated in the flowcharts of Figures 4B, 5, 9, 12, 15, 19 and 23 are realized. A read only memory (to be referred to as a ROM hereinafter) 303 stores the operation process procedure of the CPU 301. The ROM 303 includes a program ROM which records basic software (operating system (OS)) serving as a system program for device control of the information processing apparatus and a data ROM which records information necessary for the operation of the system. Some devices use an HDD 309 (to be described later) in place of the ROM 303.

A network interface (to be referred to as an NETIF hereinafter) 304 executes control or connection state diagnosis for data transfer between information processing apparatuses through the network 102.

A video RAM (to be referred to as a VRAM hereinafter) 305 rasterizes an image to be displayed on the screen of a CRT 306 to indicate the operation state of the information processing apparatus (to be described later) and controls display. The display device (to be referred to as the CRT hereinafter) 306 is formed from, for example, a display. A keyboard controller (to be referred to as a KBC hereinafter) 307 controls an input signal from an external input device 308. The external input device (to be referred to as a KB hereinafter) 308 receives a user operation and includes a keyboard and a pointing device such as a mouse.

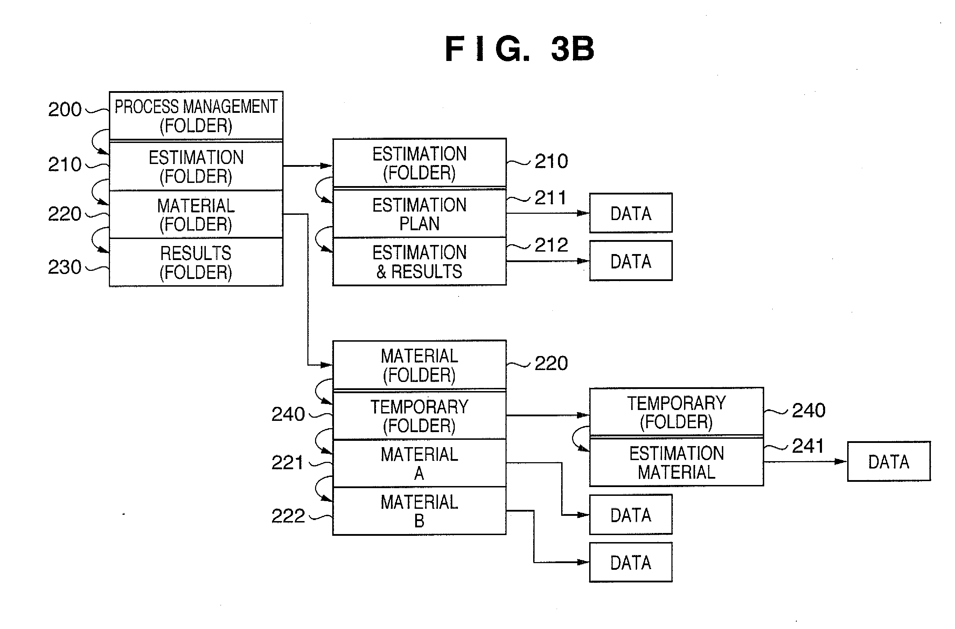

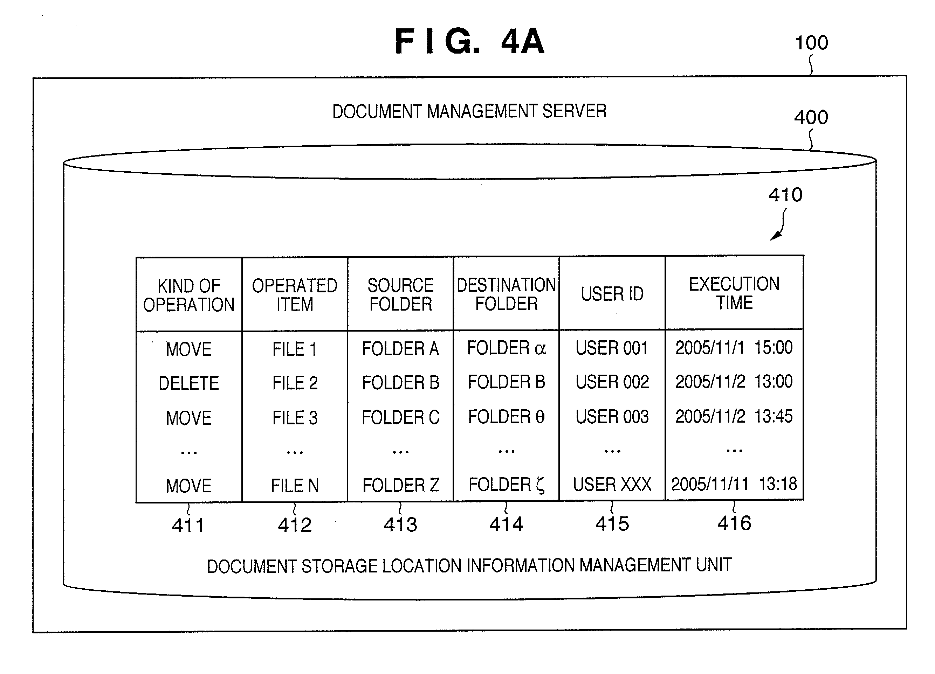

The hard disk drive (to be referred to as the HDD hereinafter) 309 is used to store application programs and various kinds of data. In this embodiment, an application program indicates, for example, a software program to execute various kinds of processing means in this embodiment. The HDD 309 also stores a hierarchical file structure (see Fig. 3B; to be described later) and a document storage location information management table (see Fig. 4A) of this embodiment, which are read out to the RAM 302 and operated such as changed, as needed.

An external input/output device (to be referred to as an FDD hereinafter) 310 is a drive to input/output a removable disk, including a floppy disk drive and CD-ROM drive, and is used to, for example, read out the above-described application programs from a medium. An external storage medium (to be referred to as an FD hereinafter) 313 is read-accessed by the FDD 310. The external storage medium includes a detachable data storage device (removable medium) such as a magnetic storage medium (for example, floppy disk or external disk), optical storage medium (for example, CD-ROM), magneto-optical storage medium (for example, MO), or a semiconductor storage medium (for example, memory card). The application programs and data stored in the HDD 309 may be stored in the FD 313 and used.

A printer controller (to be referred to as a PRTC hereinafter) 311 controls an output signal to a printing apparatus (to be referred to as a PRT hereinafter) 312 (to be described later). The PRT 312 uses, for example, an LBP (Laser Beam Printer).

A transmission bus (address bus, data bus, input/output bus, and control bus) 300 connects the above-described units to each other.

### (Example of Document Management in Document Management Server of This Embodiment)

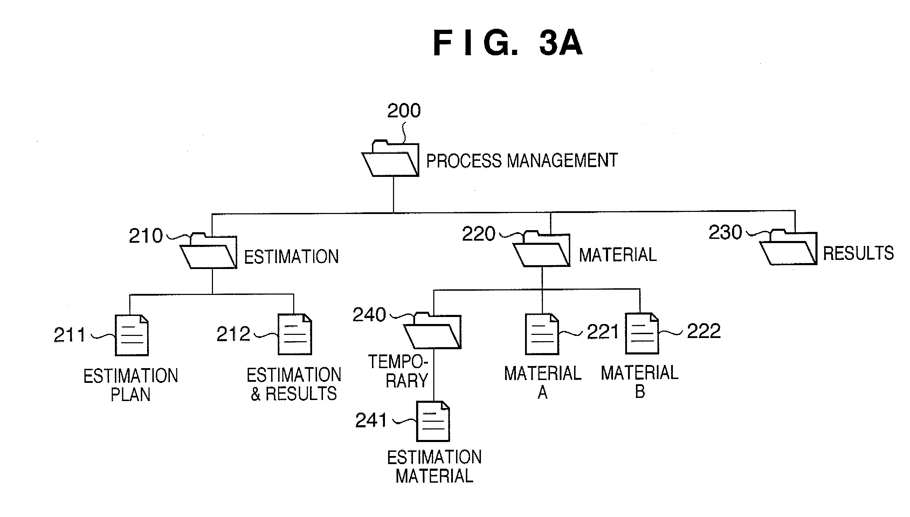

Fig. 3A is a view for explaining an example of document management in the document management server according to this embodiment. Fig. 3A shows a state wherein documents are managed in a hierarchical structure.

(1) A process management folder 200 exists as a root node. An estimation folder 210, a material folder 220 and a results folder 230 exist under the process management folder 200.

(2) Two files, that is, an estimation plan file 211 and an estimation & results file 212 exist under the estimation folder 210.

(3) Two files and one folder, that is, a material A file 221, a material B file 222 and a temporary folder 240 exist under the material folder 220.

(4) An estimation material file 241 exists under the temporary folder 240.

(5) No folder or file exists under the results folder 230.
Wherein names of the folders (200, 210, 220, 230, 240) and the files (211, 212, 221, 222, 241) are examples.

Fig. 3B is a view showing an example of a hierarchical structure stored in a storage medium (for example, HDD 309) to implement the document management example in Fig. 3A.

The reference numerals in Fig. 3B correspond to those in Fig. 3A. Each arrow represents the association between files and is indicated by a normal pointer. Actual data of the contents of the documents are stored on the most downstream files. This structure need not always be stored in one element in Fig. 2 and can divisionally be stored in a plurality of storage media.

As the structure in Fig. 3A changes due to movement or deletion of a folder or document, the structure in Fig. 3B also changes. In this embodiment, the system can hold not only the current file structure shown in Fig. 3B but also an operation history of movement or deletion and notify the user of the operation history.

In this embodiment, an operation example of folder or document movement or deletion will be made assuming that documents are managed in the state shown in Fig. 3A and 3B. However, the processing technique of this embodiment is not limited to this structural example and is also universally applicable to any other structural example, as is apparent to those skilled in the art.

### (Example of Document Storage Location Information Management in Document Management Server of This Embodiment)

Fig. 4A is a view showing an arrangement example of a document storage location information management unit 400 in the document management server 100 according to this embodiment.

The document storage location information management unit 400 corresponding to a history holding means has a document storage location information management table 410 corresponding to a first storage means for storing an operation history. Using the document storage location information management table 410, the document storage location information management unit 400 implements a document management system capable of, if a stored document is moved, notifying the user of the movement destination folder, and if a document is deleted, notifying the user that the document has been deleted. As shown in Fig. 4A, the document storage location information management unit 400 functions as a means for managing the movement destination folder of a moved document or the deletion state of a deleted document in the document management server 100.

A kind of operation 411 indicates an executed operation such as "movement" or "deletion". An operated item 412 indicates a moved document or folder or a deleted document or folder. The operated item 412 can be either a file name or a file identifier (ID), though it must be data capable of uniquely specifying and identifying a file.

A source folder 413 indicates a storage source folder in which an operated document or folder was once stored before operating of the moved or deleted document or folder. A destination folder 414 indicates a folder which is the movement destination folder of a moved document or folder. In this embodiment, when a document or folder is deleted, the history of deletion is shown by copying the folder name of the source folder 413 to the destination folder 414.

A user ID 415 indicates the ID of a user who executed an operation such as movement or deletion. An execution time 416 indicates a time when an operation such as movement or deletion has been executed.

When an arbitrary document or folder is moved or deleted, the document storage location information management unit 400 of the document management server 100 records the pieces of information 411 to 416 in the document storage location information management table 410 as a history of the operation.

### <Operation Example of Document Management Server in Document Management System of This Embodiment>

### (Example of Folder Content Display Procedure of This Embodiment)

Fig. 4B is a flowchart illustrating an example of a folder content display procedure in opening a folder in the document management system of this embodiment. Fig. 4B is applicable to the entire process of moving or deleting a folder or document to be described below. Therefore, a step(s) not necessary in a target process is skipped without any execution.

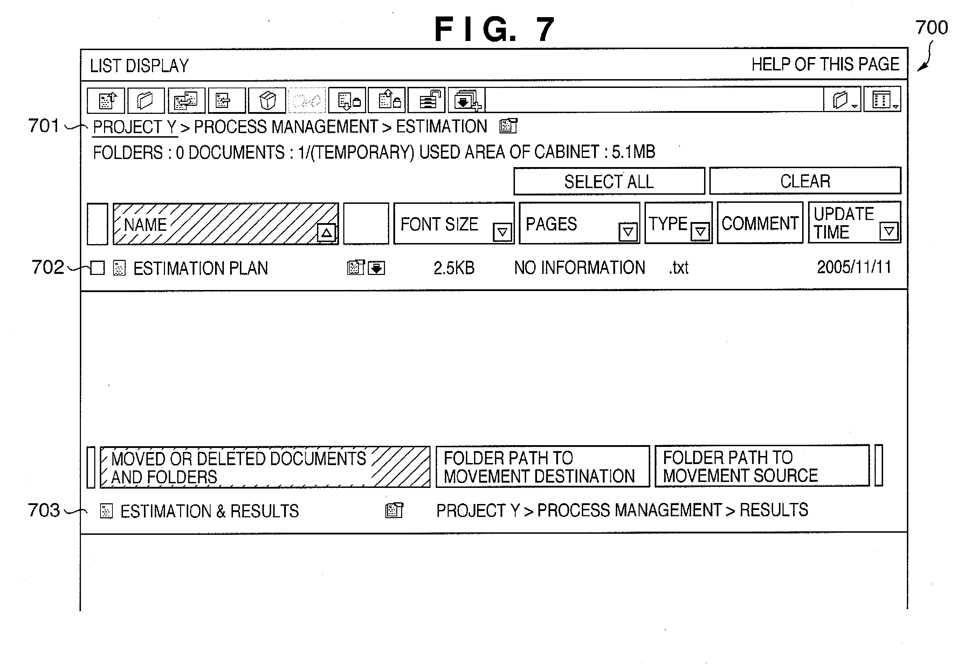

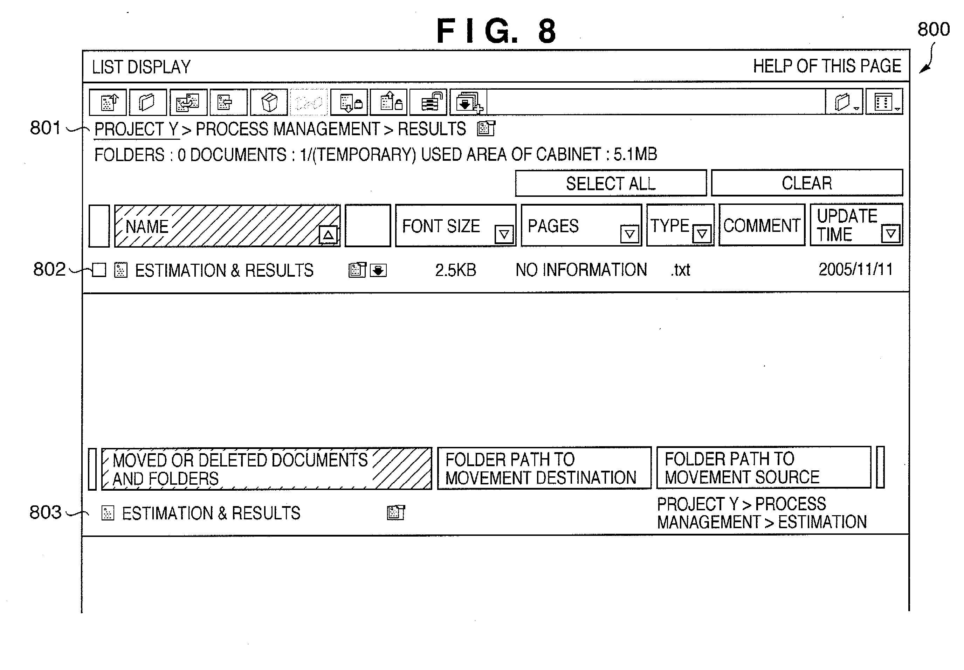

When the user performs an operation of opening a target folder, the file information of a folder or file managed under the target folder is acquired in step S401. For example, when the user opens the process management folder 200 in Fig. 3A, the estimation folder 210, the material folder 220 and the results folder 230 are acquired as file information. When the user opens the material folder 220, the material A file 221, the material B file 222 and the temporary folder 240 are acquired as file information. In step S402, the managed file list of folders and files currently managed under the target folder is created in accordance with the file information acquired in step S401. For example, a list 702 in Fig. 7 or a list 802 in Fig. 8 is generated.

In step S403, the document storage location information management table 410 shown in Fig. 4A is read out. The operated item 412, for which the kind of operation 411 is "move" and the opened target folder matches the source folder 413, is acquired. In step S404, a movement destination file list indicating a movement destination folder(s) of a moved file(s)/folder(s) is created based on the file information of the operated item 412 acquired in step S403. For example, a list 703 in Fig. 7 is created.

In step S405, the document storage location information management table 410 shown in Fig. 4A is read out. The operated item 412, for which the kind of operation 411 is "move" and the opened target folder matches the destination folder 414, is acquired. In step S406, a movement source file list indicating a movement source folder(s) is created based on the file of the operated item 412 acquired in step S405. For example, a list 803 in Fig. 8 is created.

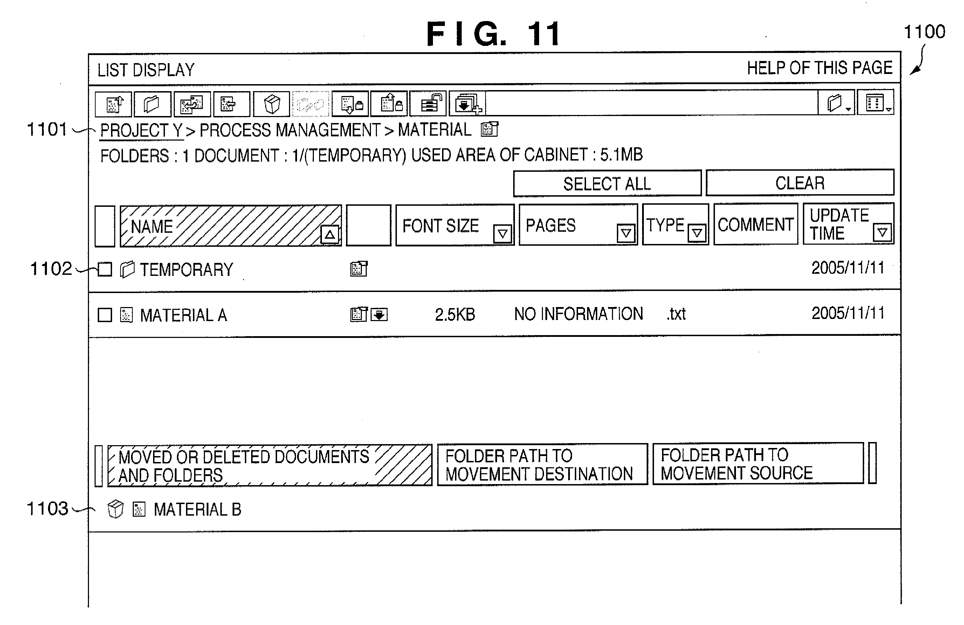

In step S407, the document storage location information management table 410 shown in Fig. 4A is read out. The operated item 412, for which the kind of operation 411 is "delete" and the opened target folder matches the destination folder 414, is acquired. In step S408, a deleted file list indicating deletion state is created based on the file of the operated item 412 acquired in step S407. For example, a list 1103 in Fig. 11 is created.

In step S409 corresponding to a determination means, it is checked, if necessary, whether or not the user who is operating has an access right to a folder or a document. In step S410 corresponding to a history display means, only information about folders or documents for which the user is determined in step S409 to have an access right is displayed. Note that the access right check in step S409 is an optional process for security protection and therefore, can be omitted.

Examples of update of the document storage location information management table 410 according to the respective user operations and several examples of display on opening folders will be described below based on the above-described overall arrangement and process procedure. In the initial state, the files have the structure shown in Figs. 3A and 3B.

### <Example of Document Movement of This Embodiment>

### (Example of Management Information Registration Procedure in Document Movement)

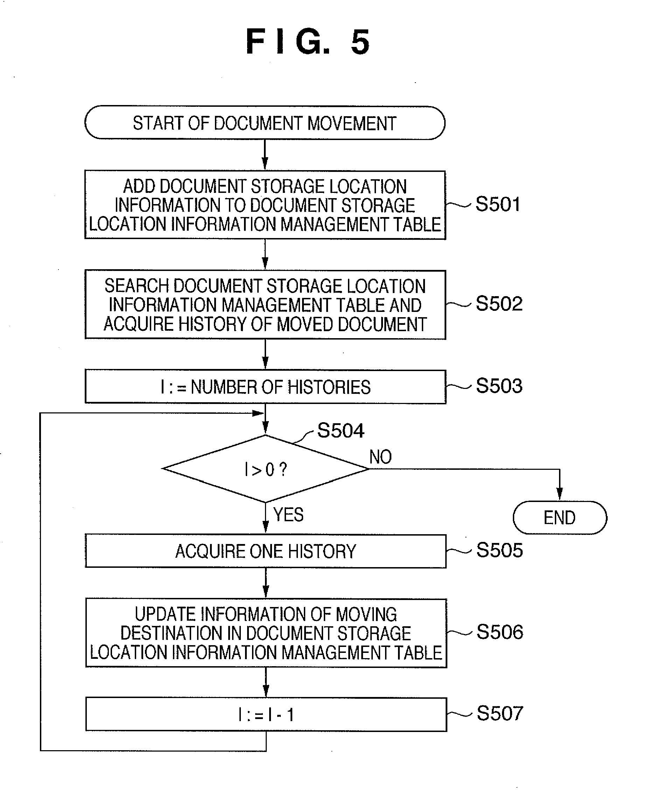

Fig. 5 is a flowchart of a process of the document management server 100 when a user moves an arbitrary document managed in the document management server 100. In the document management server 100 of the document management system according to this embodiment, when the document moving operation is executed, the process in the following steps is executed in addition to the moving process to record the information of the movement destination folder of the moved document.

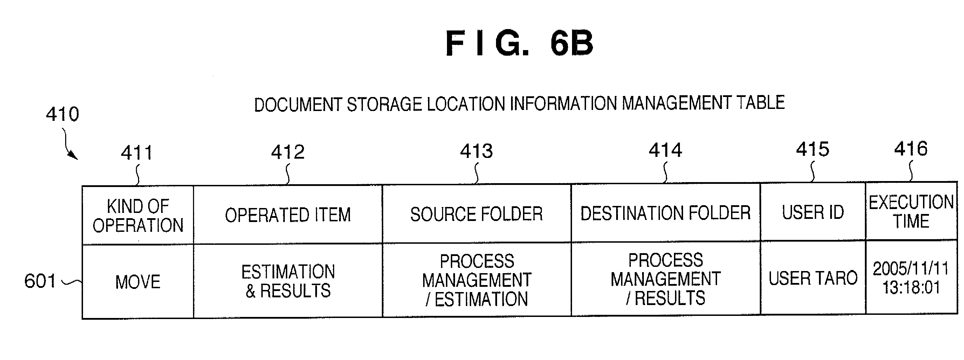

In step S501, document storage location information is added to the document storage location information management table 410. The document storage location information at this time contains "move" as the kind of operation 411, the operated item 412, the source folder 413, the destination folder 414, the user ID 415 of the user who executed the operation, and the execution time 416 of the operation (Fig. 6B). In step S502 corresponding to an acquisition means, the document storage location information management table 410 is searched based on the moved document to acquire the history of the moved document. That is, from the pieces of document storage location information registered in the document storage location information management table 410, all pieces of document storage location information having an operated item equal to the operation item in the document storage location information added in step S501 are acquired. The document storage location information added in step S501 is not contained in the acquired document storage location information. Each piece of the acquired document storage location information indicates history information of movement in the past.

In the process in steps S503 to S507 corresponding to a history update means, a piece of document storage location information is acquired from the acquired history of the moved document (S505). The information of the destination folder in the acquired piece of document storage location information is updated to the same information as the destination folder in the document storage location information added in step S501 (S506). With this process, the information of the destination folder in the acquired piece of document storage location information always indicates the latest information of the (moving) destination folder. Simultaneously, the user ID 415 and execution time 416 in the acquired piece of document storage location information are also updated to the ID of the user who has moved the document and the movement execution time, respectively. The process in steps S504 to S507 is repeated as many times as the number of pieces of history information acquired in step S502 (that is, the process is repeated for all pieces of document storage location information acquired in step S502). A variable I represents the number of pieces of history information acquired in step S502 and is used to control the repeating count.

### (Definite Example of Document Movement)

A definite example of the document moving process and a folder display example at that time will be described below.

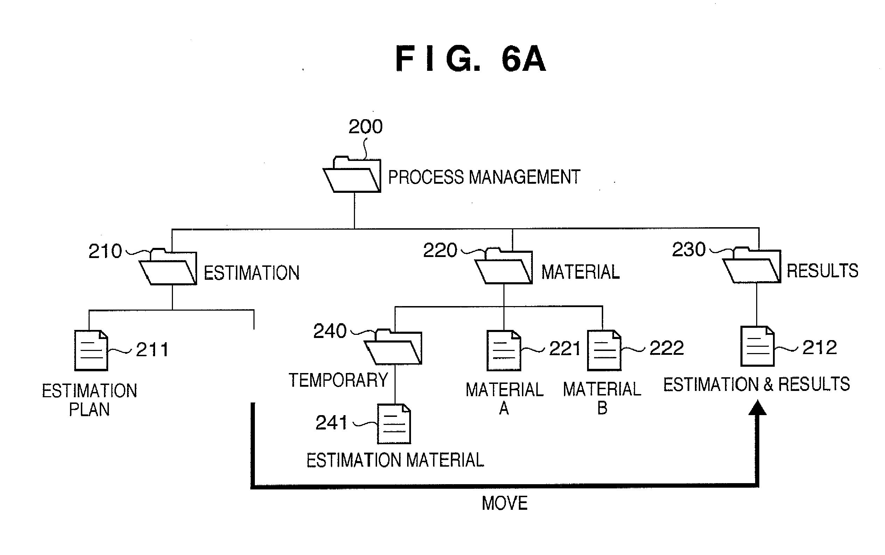

Figs. 6A and 6B are views for respectively explaining a folder structure obtained by moving the estimation & results file 212 stored under the estimation folder 210 to the results folder 230 in the example of the document management state in Fig. 3A, and information registered in the document storage location information management table 410. In Fig. 6B, the moving operation is the first operation.

When the moving operation in Fig. 6A is done in the initial state shown in Fig. 3A, document storage location information 601 with the structure shown in Fig. 6B is additionally registered in the document storage location information management table 410. "Move" is stored as the kind of operation 411, and "estimation & results" indicating the moved document is stored as the operated item 412. "Process management/estimation" indicating the folder in which the estimation & results file 212 was stored before movement is stored as the source folder 413. "Process management/results" indicating the folder in which the estimation & results file 212 has been stored after movement is stored as the destination folder 414. The user "User Taro" who performed the moving operation is stored as the user ID 415. The moving operation time "2005/11/11 13:18:01" is stored as the execution time 416.

If this moving operation is the first operation, the document storage location information management table 410 includes no information having the value "estimation & results" as the operated item 412 in the past. Hence, after step S501 in Fig. 5, the process is ended without updating the history information.

If history information is present, the value of the destination folder 414 in all pieces of document storage location information having the value "estimation & results" as the operated item 412 in the past is changed to "process management/results" in the document storage location information management table 410. With this update process, even when a document D is moved from a folder A to a folder B and then to a folder C, it is possible to notify the user who has designated the folder A for the target document D, of the folder C being the current storage location of the target document D.

### (Display Example of Document Movement)

Fig. 7 shows a screen display example 700 when the user executes the document moving operation in Fig. 6A and then opens the estimation folder 210 which is the movement source folder.

In Fig. 7, the name of the opened folder, "estimation" is displayed in this example at an upper part 701 of the screen. A list of documents or folders stored under the opened folder is displayed at a middle part 702 of the screen. In this example, since the "estimation & results" document is moved to another folder, only "estimation plan" indicating the "estimation plan" document is displayed. A list of documents or folders which were once stored in the "estimation" folder but have been moved or deleted is displayed at a lower part 703 of the screen.

The list of documents or folders which were once moved or deleted, which is displayed at the lower part 703 of the screen, shows the folder path to the current movement destination folder of a document or folder which was once stored under the opened folder and has been moved from the opened folder, as shown in Fig. 7. In Fig. 7, the list of documents or folders which are stored under the opened folder and the list of documents or folders which were once stored under the opened folder are displayed in one window. However, this is merely an example, and the display form is not limited to this example. For example, the list of documents or folders which were moved or deleted in the past may separately be displayed in accordance with a folder designated by the user.

To display the list of documents or folders which were moved from the movement source folder, as shown in Fig. 7, information is acquired from the document storage location information management table 410 in accordance with the following procedure. This process corresponds to steps S403 and S404 in Fig. 4B.

First, pieces of document storage location information in which the source folder 413 matches the folder being a target for displaying the list are acquired from the document storage location information management table 410.

The pieces of information of the kind of operation 411, the operated item 412, and the destination folder 414 in each of the pieces of document storage location information acquired in the above step are displayed as a list.

In the document management system, an access right can be set to control user accessibility to a document or a folder in many cases. In the above mentioned step, all pieces of current storage location information can be acquired. However, document storage location information to be acquired may be controlled in the following way in accordance with access rights set for documents or folders managed in the document management system. This process corresponds to the addition of step S409 in Fig. 4B.

First, pieces of document storage location information in which the source folder 413 matches the folder being a target for displaying the list are acquired from the document storage location information management table 410.

Pieces of document storage location information for which the user has an access right (can refer) to both the operated item 412 and destination folder 414 are selected from the pieces of document storage location information acquired in the above step.

The pieces of information of the kind of operation 411, the operated item 412 and the destination folder 414 in each of the pieces of document storage location information selected in the above step are displayed as a list.

Fig. 8 shows a screen display example 800 when the user executes the document moving operation in Fig. 6A and then opens the results folder 230 being the movement destination folder.

In Fig. 8, the name of the opened folder, "results" is displayed in this example at an upper part 801 of the screen. A list of documents or folders stored under the opened folder is displayed at a middle part 802 of the screen. In this example, the moved "estimation & results" indicating the "estimation & results" document is displayed. A list of documents or folders which were once moved or deleted is displayed at a lower part 803 of the screen.

The list of documents or folders which were once moved or deleted, which is displayed at the lower part 803 of the screen, shows the folder path to the movement source folder in which a document or a folder was stored before movement to the current opened folder, as shown in Fig. 8. In Fig. 8, the list of documents or folders which are stored under the opened folder and the list of documents or folders which were once moved to or deleted from the opened folder are displayed in one window. However, this is merely an example, and the display form is not limited to this example. For example, the list of documents or folders which were once moved or deleted may separately be displayed in accordance with a folder designated by the user.

To display the list of documents or folders which were once moved to the movement destination folder, as shown in Fig. 8, document storage location information is acquired from the document storage location information management table 410 in accordance with the following procedure. This process corresponds to steps S405 and S406 in Fig. 4B.

First, pieces of document storage location information in which the destination folder 414 matches the folder being a target for displaying the list are acquired from the document storage location information management table 410.

The pieces of information of the kind of operation 411, the operated item 412 and the source folder 413 in each of the pieces of document storage location information acquired in the above step are displayed as a list.

In the above step, all pieces of current storage location information can be acquired. However, document storage location information to be acquired may be controlled in the following way in accordance with access rights set for documents or folders managed in the document management system. This process corresponds to the addition of step S409 in Fig. 4B.

First, pieces of document storage location information in which the destination folder 414 matches the folder being a target for displaying the list are acquired from the document storage location information management table 410.

Pieces of document storage location information for which the user has an access right (can refer) to both the operated item 412 and source folder 413 are selected from the document storage location information acquired in the above step.

The pieces of information of the kind of operation 411, the operated item 412 and the source folder 413 in each of the pieces of document storage location information selected in the above step are displayed as a list.

### <Example of Document Deletion of This Embodiment>

### (Example of Management Information Registration Procedure in Document Deletion)

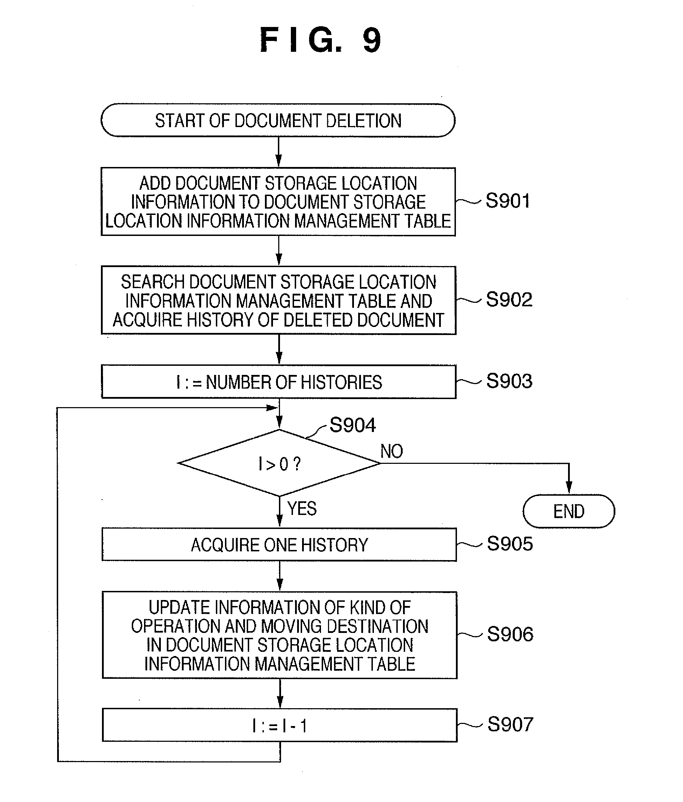

Fig. 9 is a flowchart of a process of the document management server 100 when a user deletes an arbitrary document managed in the document management server 100. In the document management system according to this embodiment, when the document deleting operation is executed, the process in the following steps is executed in addition to the deleting process to record document storage location information representing the "deleted" state of the deleted document.

When the user deletes a document from the target folder, in step S901, document storage location information is added to the document storage location information management table 410. The document storage location information at this time contains "delete" as the kind of operation 411, the operated item 412, the source folder 413, the destination folder 414, the user ID 415 of the user who executed the deleting operation, and the execution time 416 of the deleting operation. The information of the folder from which the document has been deleted is stored as the source folder 413. The information of the storage location folder at the time of deletion is stored (copied) in the destination folder 414. Hence, the source folder 413 and destination folder 414 store the same information.

In step S902, the document storage location information management table 410 is searched to acquire the history of the deleted document. That is, from the pieces of document storage location information registered in the document storage location information management table 410, all pieces of document storage location information having an operated item equal to the operated item in the document storage location information added in step S901 are acquired. The document storage location information added in step S901 is not contained in the acquired pieces of document storage location information. Each piece of acquired document storage location information indicates history information of deletion in the past.

In S903 to S907, the acquired history information is updated. More specifically, a piece of document storage location information is acquired from the acquired history of the deleted document (S905). The kind of operation in the acquired document storage location information is updated to "delete", and the information of the destination folder 414 is updated to the same information as the destination folder in step S901 (S906). With this process, the information of the destination folder indicates the information of the folder in which the document was being stored at the time of actual deletion. Simultaneously, the user ID 415 and execution time 416 in the acquired document storage location information are also updated to the ID of the user who has deleted the document and the deletion execution time, respectively.

The process in steps S904 to S907 is repeated as many times as the number of the pieces of history information acquired in step S902 (that is, the process is repeated for all pieces of document storage location information acquired in step S902). The variable I represents the number of pieces of history information acquired in step S902 and is used to control the repeating count.

### (Definite Example of Document Deletion)

A definite example of the document deleting process and a folder display example will be described below.

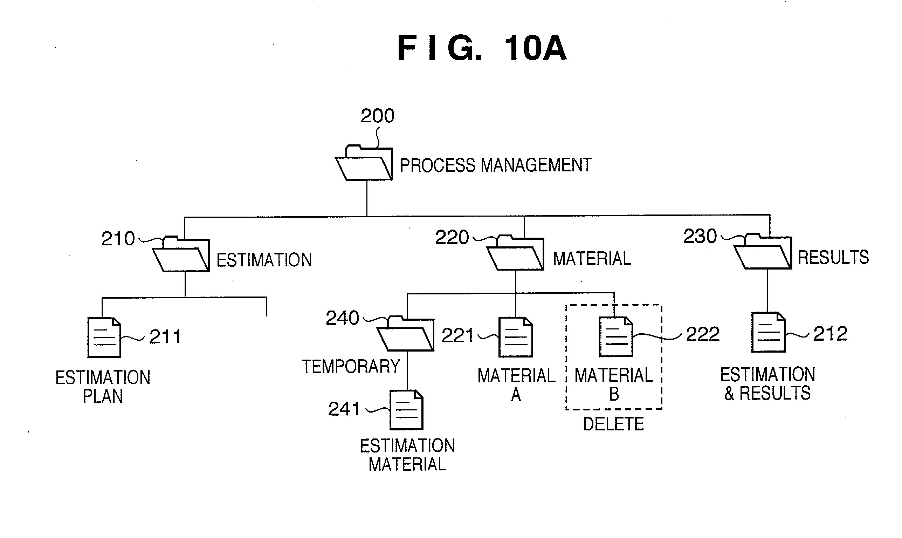

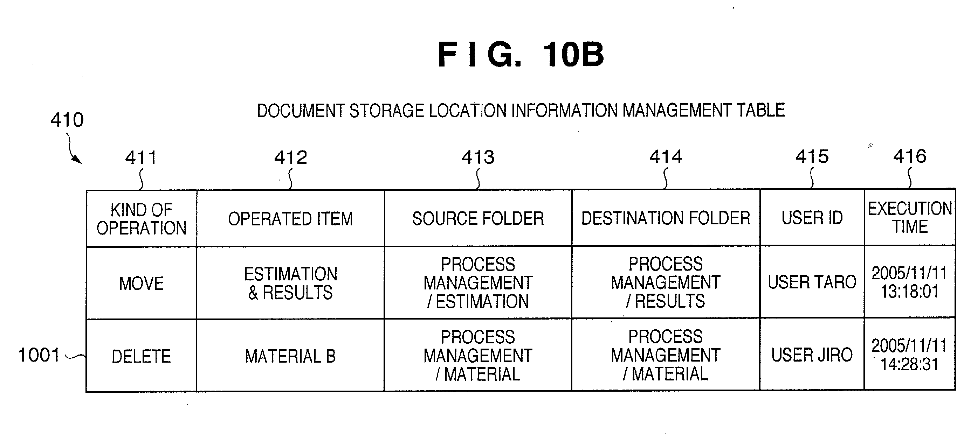

Figs. 10A and 10B are views for respectively explaining a folder structure obtained by deleting the material B file 222 stored under the material folder 220 in the example of the document management state in Fig. 6A, and document storage location information registered in the document storage location information management table 410.

When the deleting operation in Fig. 10A is done in the state shown in Fig. 6A, document storage location information 1001 is additionally registered in the document storage location information management table 410, as shown in Fig. 10B. "Delete" is stored as the kind of operation 411, and "material B" indicating the deleted document is stored as the operated item 412. "Process management/material" indicating the folder in which the material B file 222 was stored before deletion is stored as the source folder 413. "Process management/material" indicating the folder from which the material B file 222 is deleted is stored as the destination folder 414. The user "User Jiro" who has performed the deleting operation is stored as the user ID 415. The deleting operation time "2005/11/11 14:28:31" is stored as the execution time 416.

The document storage location information management table 410 includes no document storage location information having the value "material B" as the operated item 412 in the past. Hence, the process is ended without updating the registered information. If pieces of document storage location information with the value "material B" are present, the value of the kind of operation in each piece of document storage location information having the value "material B" as the operated item 412 is changed to "delete", and the value of the destination folder 414 is changed to "process management/material" in the document storage location information management table 410. With this update process, even when the document D was moved from the folder A to the folder B and then deleted from the folder B, it is possible to designate the folder A and notify the user who has designated the folder A for the target document D, in the display window of the folder A, of information representing that the document D was deleted in the folder B.

### (Display Example of Document Deletion)

Fig. 11 shows a screen display example 1100 when the user executes the document deleting operation in Fig. 10A and then opens the material folder 220 being the deletion source folder.

In Fig. 11, the name of the opened folder, "material" is displayed in this example at an upper part 1101 of the screen. A list of documents or folders stored under the opened folder is displayed at a middle part 1102 of the screen. In this example, since the "material B" document 222 is deleted from the "material" folder 220, "temporary" and "material A" respectively indicating the "temporary" folder 240 and the "material A" document 221 are displayed. A list of documents or folders which have been moved or deleted is displayed at a lower part 1103 of the screen.

The list of documents or folders which have been moved or deleted, which is displayed at the lower part 1103 of the screen, shows the "deleted" state (as shown by a "trash bin" mark in Fig. 11) of a document or folder which was once stored in the opened folder and deleted from the opened folder. If the document or folder which was once stored under the opened folder was moved to another folder and then deleted, the folder path at the time of deletion may be displayed together with the "deleted" state (a "trash bin" mark in Fig. 11). In Fig. 11, the list of documents or folders which are stored under the opened folder and the list of documents or folders which were once stored under the opened folder are displayed in one window. However, this is merely an example, and the display form is not limited to this. For example, the list of documents or folders which have been moved or deleted may be displayed separately in accordance with a folder designated by the user.

To display the list of documents or folders which have been deleted from the deletion source folder, as shown in Fig. 11, document storage location information is acquired from the document storage location information management table 410 in accordance with the following procedure. This process corresponds to steps S407 and S408 in Fig. 4B.

First, pieces of document storage location information in which the source folder 413 and destination folder 414 match the folder being a target for displaying the list are acquired from the document storage location information management table 410.

The pieces of information of the kind of operation 411, the operated item 412, the source folder 413 and the destination folder 414 in each of the pieces of document storage location information acquired in the above step are displayed as a list. Especially, if the kind of operation 411 is "delete" and the source folder 413 is different from the destination folder 414, the folder path at the time of deletion from the destination folder 414 may be acquired and displayed.

In the above step, all pieces of current storage location information can be acquired. However, document storage location information to be acquired may be controlled in the following way in accordance with access rights set for documents or folders managed in the document management system. This process corresponds to the addition of step S409 in Fig. 4B.

First, pieces of document storage location information in which the source folder 413 and destination folder 414 match the folder being a target for displaying the list are acquired from the document storage location information management table 410.

Pieces of document storage location information for which the user has an access right (can refer) to all of the kind of operation 411, the operated item 412, the source folder 413 and the destination folder 414 are selected from the document storage location information acquired in the above step.

From the document storage location information selected in the above step, pieces of information for which the user has an access right (can refer) to both the operated item 412 and source folder 413 are displayed as a list.

The above process makes it possible to notify, to the user who has opened a folder, the movement destination folder or deleted state of a document that was moved or deleted from the opened folder.

### <Example of Folder Movement of This Embodiment>

### (Example of Management Information Registration Procedure in Folder Movement)

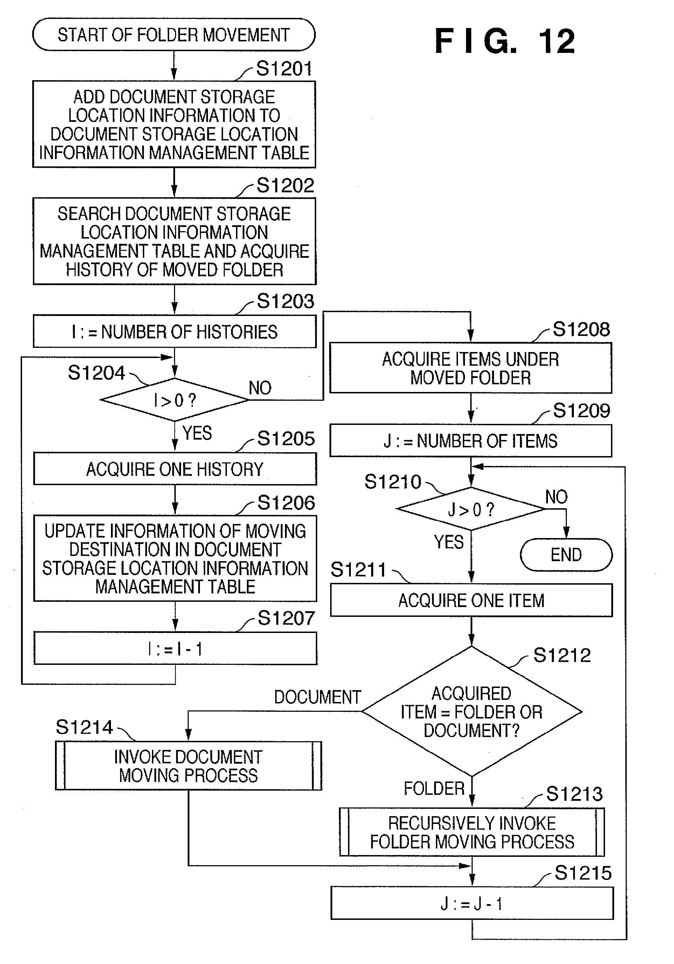

Fig. 12 is a flowchart of a process of the document management server 100 when a user moves an arbitrary folder managed in the document management server 100. In the document management system according to this embodiment, when the folder moving operation is executed, the process in the following steps is executed in addition to the folder moving process to record document storage location information representing the movement destination folder of the moved folder and the movement destination folder of a document or folder stored under the moved folder.

When movement of a target folder is instructed, document storage location information is added, in step S1201, to the document storage location information management table 410. The document storage location information at this time contains "move" as the kind of operation 411, the operated item 412, the source folder 413, the destination folder 414, the user ID 415 of the user who has executed the moving operation, and the execution time 416 of the moving operation.

In step S1202, the document storage location information management table 410 is searched to acquire the history of the moved folder. That is, from the pieces of document storage location information registered in the document storage location information management table 410, all pieces of document storage location information having an operated item equal to the operated item of the document storage location information added in step S1201 are acquired. The document storage location information added in step S1201 is not contained in the acquired pieces of document storage location information. Each piece of acquired document storage location information indicates history information of movement in the past.

In the process in steps S1203 to S1207, a piece of document storage location information is acquired from the acquired history of the moved folder (S1205). The information of the destination folder in the acquired document storage location information is updated to the same information as the destination folder in step S1201 (S1206). With this process, the information of the destination folder always indicates the latest information of the (movement) destination folder. Simultaneously, the user ID 415 and execution time 416 in the acquired document storage location information are also updated to the ID of the user who has moved the document and the movement execution time, respectively.

The process in steps S1204 to S1207 is repeated as many times as the number of pieces of history information acquired in step S1202 (that is, the process is repeated for all pieces of document storage location information acquired in step S1202). The variable I is used to control the repeating count which is equal to the number of pieces of history information acquired in step S1202.

When the update process finishes, the process advances from step S1204 to step S1208 to acquire items (such as documents and folders) under the moved folder.

In steps S1209 to S1215 corresponding to a repeating means, one item is acquired from the items acquired in step S1208 (S1211). If the acquired item is a document, the above-described document moving process steps are executed (S1214, corresponding to the steps S501-507 in Fig. 5). If the acquired item is a lower level folder, the folder moving process steps in step S1213 (corresponding to S1201 to S1207 in Fig. 12) are recursively executed.

The process in steps S1210 to S1215 is repeated as many times as the number of items acquired in step S1208. A variable J is used to control the repeating count which is equal to the number of items acquired in step S1208.

### (Definite Example of Folder Movement)

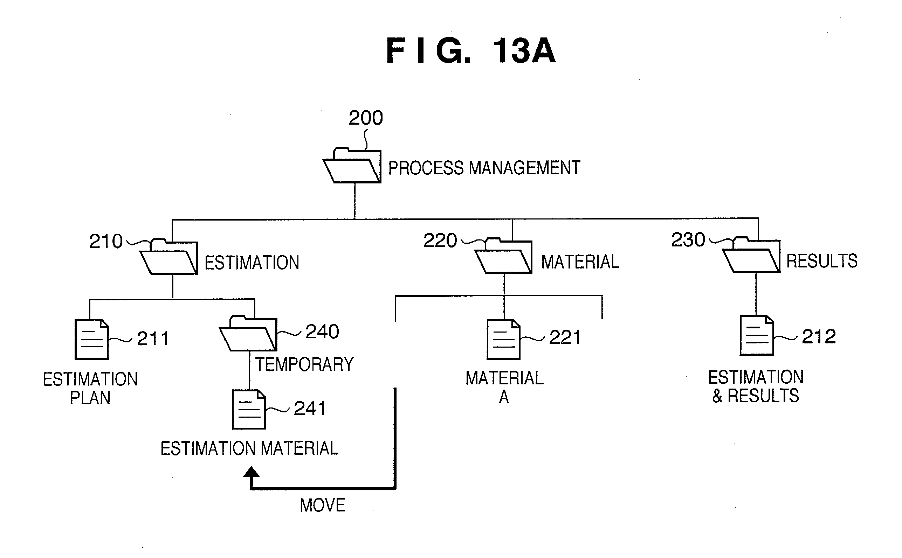

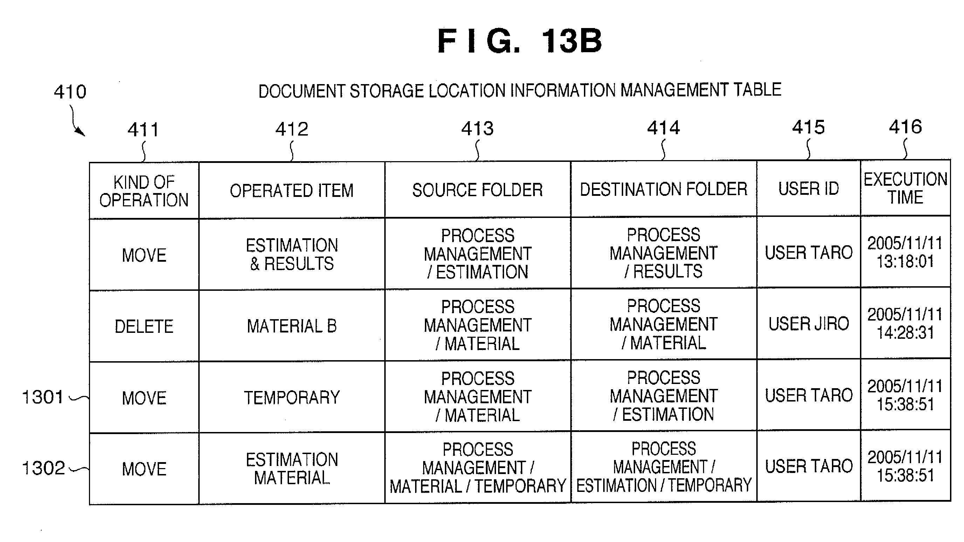

Figs. 13A and 13B are views for respectively explaining a folder structure obtained by moving the temporary folder 240 stored under the material folder 220 to the estimation folder 210 in the example of the document management state in Fig. 10A, and document storage location information registered in the document storage location information management table 410.

When the folder moving operation in Fig. 13A is done in the state shown in Fig. 10A, first, document storage location information 1301 with the following structure is additionally registered in the document storage location information management table 410. "Move" is stored as the kind of operation 411, and "temporary" indicating the moved folder is stored as the operated item 412. "Process management/material" indicating the folder in which the temporary folder 240 was stored before movement is stored as the source folder 413. "Process management/estimation" indicating the folder in which the temporary folder 240 is stored after movement is stored as the destination folder 414. The user "User Taro" who has performed the moving operation is stored as the user ID 415. The moving operation time "2005/11/11 15:38:51" is stored as the execution time 416.

Next, document storage location information 1302 with the following structure is additionally registered in the document storage location information management table 410. "Move" is stored as the kind of operation 411, and "estimation material" is stored as the operated item 412. "Process management/material/temporary" is stored as the source folder 413. "Process management/estimation/temporary" is stored as the destination folder 414. The user "User Taro" who has performed the moving operation is stored as the user ID 415. The moving operation time "2005/11/11 15:38:51" is stored as the execution time 416. This registration is done because the estimation material file 241 as a document (= item) stored under the temporary folder 240 is also moved with the temporary folder 240.

The document storage location information management unit 400 includes neither document storage location information having the value "temporary" as the operated item 412 in the past nor document storage location information having the value "estimation material". Hence, the process is ended without updating. If document storage location information having the value "temporary" or document storage location information having the value "estimation material" is present, the value of the destination folder 414 in all pieces of document storage location information having the value "temporary" as the operated item 412 in the past is changed to "process management/estimation". Next, the value of the destination folder 414 in all pieces of document storage location information having the value "estimation material" as the operated item 412 in the past is changed to "process management/estimation/temporary". With this process, even when a folder F is moved from the folder A to the folder B and then to the folder C, it is possible to, by only designating the folder A, notify the user designating the folder A, of the folder C as the current storage location of the folder F. It is also possible to appropriately notify the user, of the storage location of the document or folder stored under the folder F.

### (Display Example of Folder Movement)

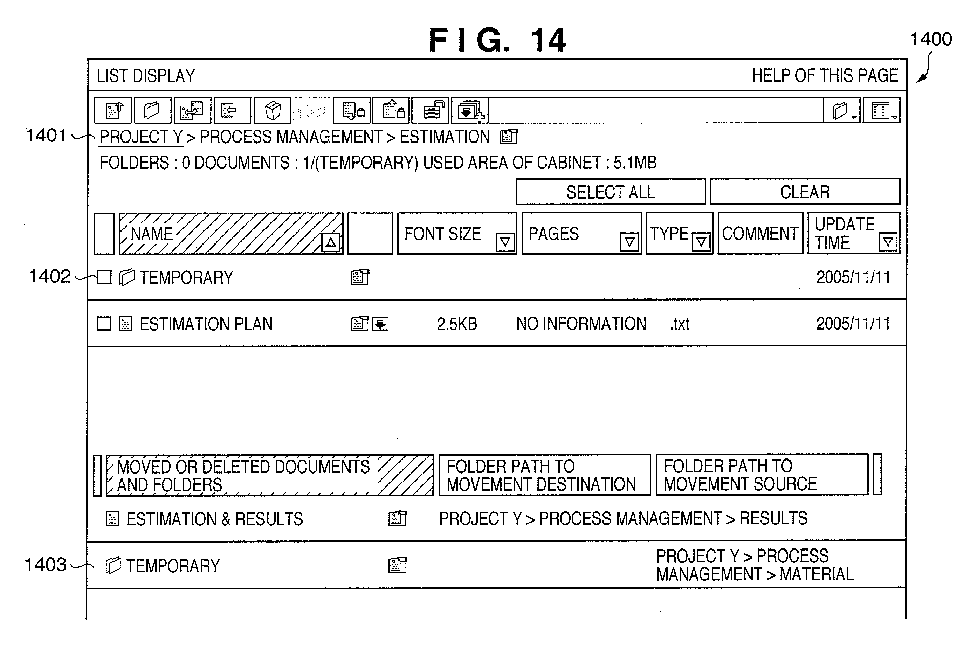

Fig. 14 shows a screen display example 1400 when the user executes the folder moving operation in Fig. 13A and then opens the estimation folder 210 being the movement destination folder.

In Fig. 14, the name of the opened folder, "estimation" is displayed in this example at an upper part 1401 of the screen. A list of documents or folders stored under the opened folder is displayed at a middle part 1402 of the screen. In this example, "temporary" indicating the folder moved into the opened folder and "estimation plan" which is stored in the opened folder from the beginning are displayed. A list of documents or folders which have been moved or deleted is displayed at a lower part 1403 of the screen.

The list of documents or folders which have been moved or deleted, which is displayed at the lower part 1403 of the screen, shows the folder path to the movement source folder in which a document or a folder was stored before movement to the current opened folder. In Fig. 14, the list of documents or folders which are stored under the opened folder and the list of documents or folders which have been moved or deleted from the opened folder are displayed in one window. However, this is merely an example, and the display form is not limited to this. For example, the list of documents or folders which have been moved or deleted may be displayed separately in accordance with a folder designated by the user.

To display the list of documents or folders which were once moved to the movement destination folder, as shown in Fig. 14, document storage location information is acquired from the document storage location information management table 410 in accordance with the following procedure. This process corresponds to steps S405 and S406 in Fig. 4B, as in the example of document movement.

First, pieces of document storage location information in which the destination folder 414 matches the folder being a target for displaying the list are acquired from the document storage location information management table 410.

The pieces of information of the kind of operation 411, the operated item 412 and the source folder 413 in each of the pieces of document storage location information acquired in the above step are displayed as a list.

In the above step, all pieces of current storage location information can be acquired. However, document storage location information to be acquired may be controlled in the following way in accordance with access rights set for documents or folders managed in the document management system. This process corresponds to the addition of step S409 in Fig. 4B.

First, pieces of document storage location information in which the destination folder 414 matches the folder being a target for displaying the list are acquired from the document storage location information management table 410.

Pieces of document storage location information for which the user has an access right (can refer) to both the operated item 412 and destination folder 414 are selected from the document storage location information acquired in the above step.

The pieces of information of the kind of operation 411, the operated item 412 and the source folder 413 in each of the pieces of document storage location information selected in the above step are displayed as a list.

Fig. 14 shows a display example in the movement destination folder. However, the same display as in the display example of document movement shown in Fig. 7 or as in Fig. 14 can be done even in the movement source folder for folder movement.

### <Example of Folder Deletion of This Embodiment>

### (Example of Management Information Registration Procedure in Folder Deletion)

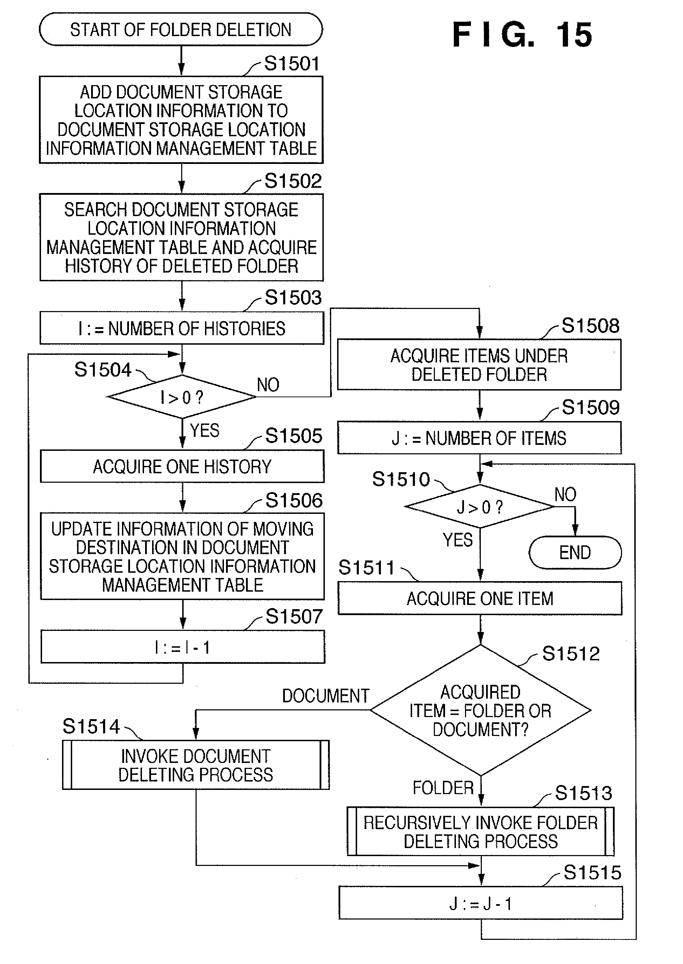

Fig. 15 is a flowchart of a process of the document management server 100 when a user deletes an arbitrary folder managed in the document management server 100. In the document management system according to this embodiment, when the folder deleting operation is executed, the process in the following steps is executed in addition to the deleting process to record document storage location information representing the "deleted" states of the deleted folder and a document or folder stored under that folder.

In step S1501, document storage location information is added to the document storage location information management table 410. The document storage location information at this time contains "delete" as the kind of operation 411, the operated item 412, the source folder 413, the destination folder 414, the user ID 415 of the user who has executed the deleting operation, and the execution time 416 of the deleting operation. The information of the folder from which the document is deleted is stored as the source folder 413. The information of the storage location folder at the time of deletion is stored in the destination folder 414. The source folder 413 and destination folder 414 represent the same information in step S1501.

In step S1502, the document storage location information management table 410 is searched to acquire the history of the deleted folder. That is, from the pieces of document storage location information registered in the document storage location information management table 410, all pieces of document storage location information having an operated item 412 equal to the operated item in the document storage location information added in step S1501 are acquired. The document storage location information added in step S1501 is not contained in the acquired piece of document storage location information. Each piece of acquired document storage location information indicates history information of movement in the past.

In S1503 to S1507, a piece of document storage location information is acquired from the acquired history of the deleted folder (S1505). The kind of operation is updated to "delete", and the information of the destination folder 414 is updated to the same information as the destination folder 414 in step S1501 (S1506). With this process, the information of the destination folder indicates the information of the folder in which the folder was stored at the time of actual deletion. Simultaneously, the user ID 415 and execution time 416 in the acquired document storage location information are also updated to the ID of the user who has deleted the document and the deletion execution time, respectively.

The process in steps S1504 to S1507 is repeated as many times as the number of pieces of history information acquired in step S1502 (that is, the process is repeated for all pieces of document storage location information acquired in step S1502). The variable I is used to control the repeating count which is equal to the number of pieces of history information acquired in step S1502.

When the repeating update of history information is ended, the process advances from step S1504 to step S1508 to acquire items (such as documents and folders) under the deleted folder.

In steps S1509 to S1515 corresponding to a repeating means, one item is acquired from the items acquired in step S1508 (S1511). If the acquired item is a document, the above-described document deleting process steps are executed (S1514, corresponding to the steps S901-S907 in Fig. 9). If the acquired item is a lower level folder, the folder deleting process steps in step S1513 are recursively executed. At this time, to change the history information of movement in the past, the information of the destination folder 414 is set to the folder designated as the destination folder 414 in step S1501. Note that process step S1513 corresponds to steps S1501 to S1507 of Fig. 15.

The process in steps S1510 to S1515 is repeated as many times as the number of items acquired in step S1508. The variable J is used to control the repetition count which is equal to the number of items acquired in step S1508.

### (Definite Example of Folder Deletion)

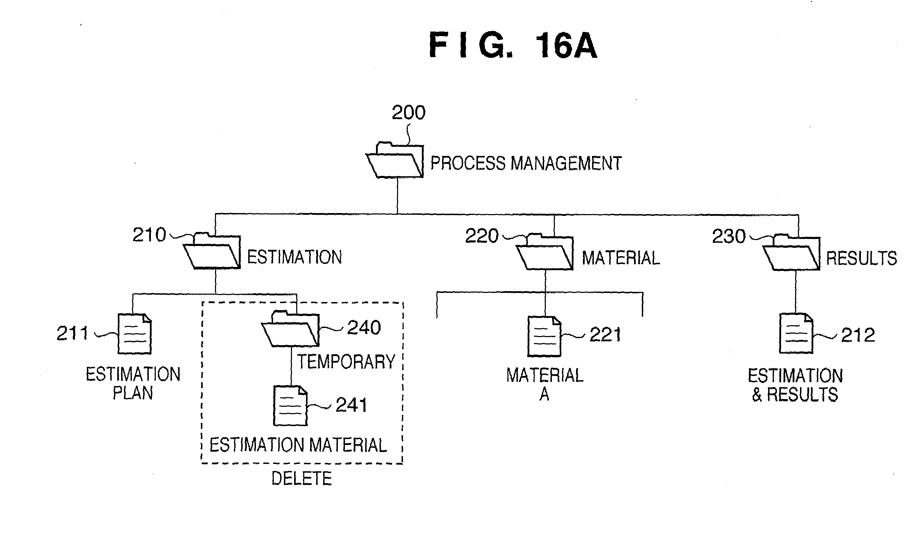

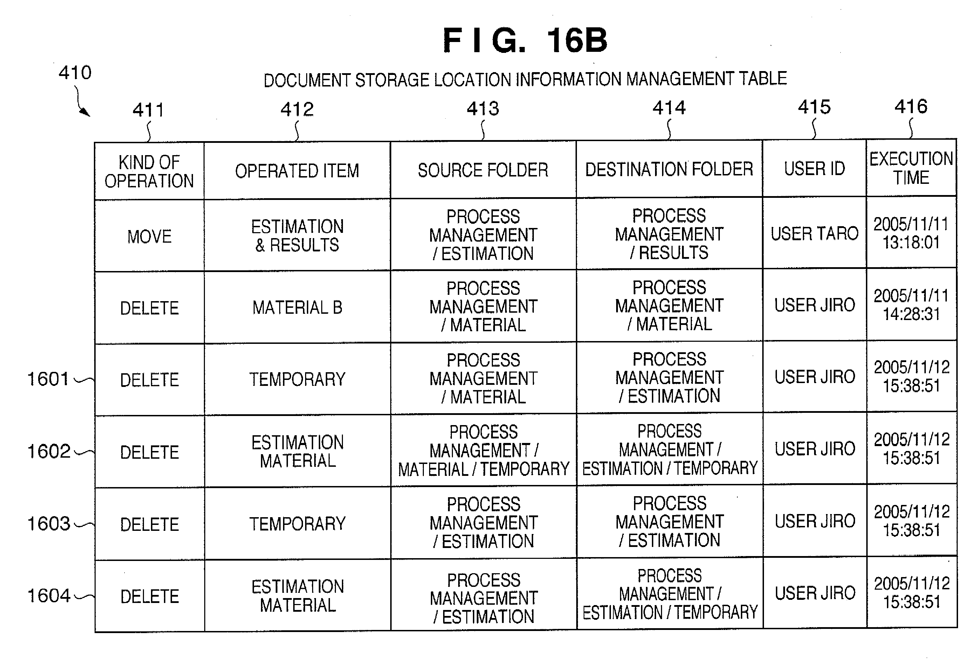

Figs. 16A and 16B are views for respectively explaining a folder structure obtained by deleting the temporary folder 240 stored under the estimation folder 210 in the example of the document management state in Fig. 13A, and document storage location information registered in the document storage location information management table 410.

When the folder deleting operation in Fig. 16A is done in the state shown in Fig. 13A, new document storage location information 1603 is additionally registered in the document storage location information management table 410. In the new document storage location information 1603, "delete" is stored as the kind of operation 411, and "temporary" indicating the deleted folder is stored as the operated item 412. "Process management/estimation" indicating the folder in which the temporary folder 240 was stored before deletion is stored as the source folder 413. "Process management/estimation" indicating the folder from which the temporary folder 240 is deleted is stored as the destination folder 414. The user "User Jiro" who has performed the deleting operation is stored as the user ID 415. The deleting operation time "2005/11/11 15:38:51" is stored as the execution time 416.

At this time, the document storage location information management table 410 includes document storage location information 1601 (corresponding to the document storage location information 1301 in Fig. 13B) which has the value "temporary" as the operated item 412. Hence, the document storage location information 1601 stored in the document storage location information management table 410 is updated in the following way. The kind of operation 411 is updated to "delete", the destination folder 414 is updated to "process management/estimation" indicating the folder in which the deleting operation is executed, the user ID is updated to "User Jiro" who has executed the deleting operation, and the execution time is updated to the deleting operation time "2005/11/11 15:38:51". With this process, even when the folder F is moved from the folder A to the folder B and then deleted from the folder B, it is possible to notify the user designating the folder A, of information representing that the folder F was deleted from the folder B. It is also possible to appropriately notify the user of information representing that a document or folder stored under the folder F was deleted.

The estimation material file 241 is stored under the temporary folder 240 and therefore deleted simultaneously. For this reason, document storage location information 1604 is additionally registered in the document storage location information management table 410. In the document storage location information 1604, "delete" is stored as the kind of operation 411, and "estimation material" indicating the deleted file is stored as the operated item 412. "Process management/estimation" is stored as the source folder 413. "Process management/estimation/temporary" indicating the folder from which the estimation material file 241 is deleted is stored as the destination folder 414. The user "User Jiro" who has performed the deleting operation is stored as the user ID 415. The deleting operation time "2005/11/11 15:38:51" is stored as the execution time 416.

When the temporary folder 240 is deleted, the document storage location information of a document or folder stored under the temporary folder 240 cannot be referred. To prevent this, in the document storage location information about a document or folder under a layer that is deleted, for example upon deletion of the temporary folder 240, not "process management/estimation/temporary" but "process management/estimation" is stored as the source folder 413. Hence, the document storage location information of the estimation folder 210 above the temporary folder 240 is used as information representing that the estimation material file 241 was "deleted".

At this time, the document storage location information management table 410 includes document storage location information 1602 (corresponding to the document storage location information 1302 in Fig. 13B) which has the value "estimation material" as the operated item 412. Hence, the document storage location information 1602 stored in the document storage location information management table 410 is updated in the following way. The kind of operation 411 is updated to "delete", the user ID is updated to "User Jiro" who has executed the deleting operation, and the execution time is updated to the deleting operation time "2005/11/12 15:38:51".

### (Display Example of Folder Deletion)

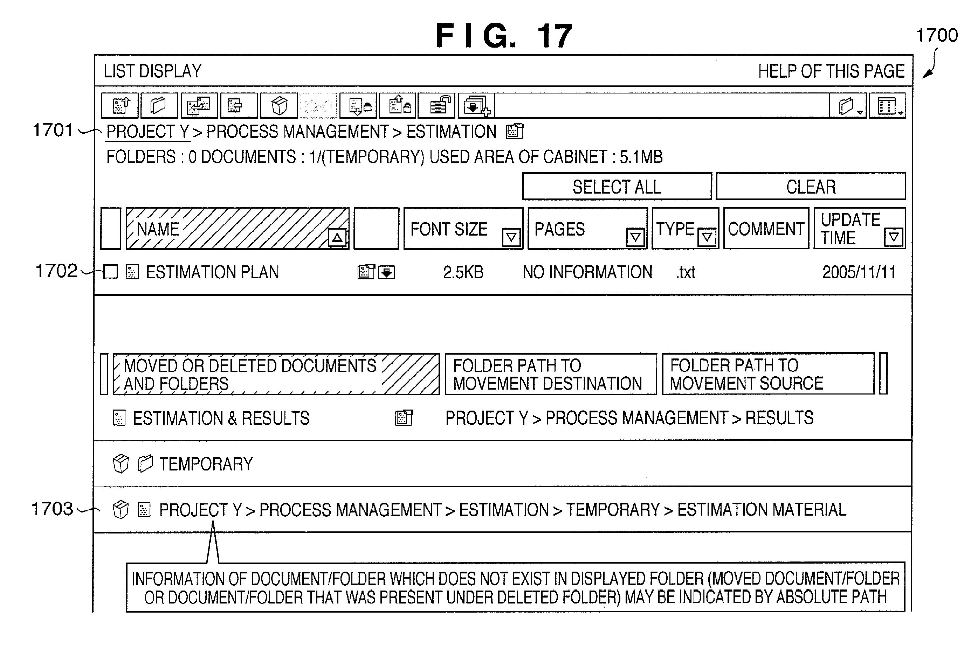

Fig. 17 shows a screen display example 1700 when the user executes the folder deleting operation in Fig. 16A and then opens the estimation folder 210 being the deletion source folder.

In Fig. 17, the name of the opened folder, "estimation" is displayed in this example at an upper part 1701 of the screen. A list of documents or folders stored under the opened folder is displayed at a middle part 1702 of the screen. In this example, since the "temporary" folder is deleted, only "estimation plan" indicating the "estimation plan" document is displayed. A list of documents or folders which have been moved or deleted is displayed at a lower part 1703 of the screen.

The list of documents or folders which have been moved or deleted, which is displayed at the lower part 1703 of the screen, shows the "deleted" state (a "trash bin" mark in Fig. 17) of a document or folder which was once stored under and has been deleted from the opened folder. If the document or folder which was once stored under the opened folder was moved to another folder and then deleted, the folder path at the time of deletion may be displayed together with the "deleted" state (a "trash bin" mark in Fig. 17). In Fig. 17, the list of documents or folders which are stored under the opened folder and the list of documents or folders which were once stored under the opened folder are displayed in one window. However, this is merely an example, and the display form is not limited to this. For example, the list of documents or folders which have been moved or deleted may be displayed separately in accordance with a folder designated by the user.

As shown in Fig. 17, the information of the estimation material file 241 stored under the temporary folder 240 can also be referred from the estimation folder 210.

To display the list of documents or folders which were once deleted from the deletion source folder, as shown in Fig. 17, document storage location information is acquired from the document storage location information management table 410 in accordance with the following procedure. This process corresponds to steps S407 and S408 in Fig. 4B.

First, pieces of document storage location information in which the source folder 413 and destination folder 414 match the folder being a target for displaying the list are acquired from the document storage location information management table 410.

The pieces of information of the kind of operation 411, the operated item 412, the source folder 413 and the destination folder 414 in each of the pieces of document storage location information acquired in the above step are displayed as a list. In particular, if the kind of operation 411 is "delete" and the source folder 413 is different from the destination folder 414, the folder path at the time of deletion from the destination folder 414 may be acquired and displayed.

In the above step, all pieces of current storage location information can be acquired. However, document storage location information to be acquired may be controlled in the following way in accordance with access rights set for documents or folders managed in the document management system. This process corresponds to the addition of step S409 in Fig. 4B.

First, pieces of document storage location information in which the source folder 413 and destination folder 414 match the folder being a target for displaying the list are acquired from the document storage location information management table 410.

Pieces of document storage location information for which the user has an access right (can refer) to all of the kind of operation 411, the operated item 412, the source folder 413 and the destination folder 414 are selected from the document storage location information acquired in the above step.

From the document storage location information selected in the above step, the information of the kind of operation 411, the operated item 412, the source folder 413 and the destination folder 414 are displayed as a list. In particular, if the kind of operation 411 is "delete" and the source folder 413 is different from the destination folder 414, the folder path at the time of deletion from the destination folder 414 may be acquired and displayed.

The above process makes it possible to notify, to the user, the movement destination folder or deleted state of a folder that was moved or deleted.

### [Second Embodiment]

In the first embodiment, a preferred embodiment of a document management system to which the present invention is applicable has been described. Recently, however, users sometimes intentionally avoid release of the information of the storage location of a document or folder on the document management system or information representing the deleted state of a document or folder, from the viewpoint of security against information leakage. In the first embodiment, it is assumed that an access right is permanently set for a folder or document.

In the second embodiment, to solve the above problem, a document management system capable of managing, for each user, an access right to document storage location information will be described.

### <Arrangement Example of Document Management Server in Document Management System of This Embodiment>

The basic arrangement of a document management system and the arrangement of a document management server and client terminals are the same as in the first embodiment. Structural elements different from the first embodiment and additional elements will be described below.

### (Example of Document Storage Location Information Access Management in Document Management Server of This Embodiment)

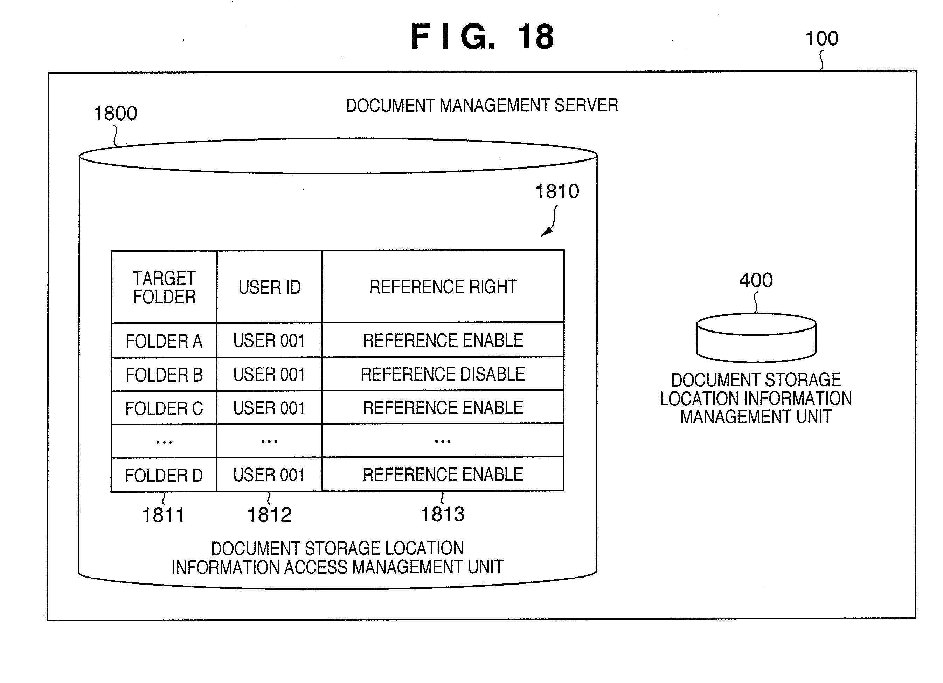

Fig. 18 is a view showing an arrangement example of a document storage location information access management unit which manages, for each user, an access right to document storage location information in a document management server 100 according to this embodiment.

Fig. 18 shows the arrangement in the document management server 100. A document storage location information management unit 400 is the same as that described in the first embodiment. A document storage location information access management unit 1800 manages which user can refer to document storage location information or not for each folder managed in the document management server 100.

The document storage location information access management unit 1800 has a document storage location information access management table 1810 corresponding to a second storage means. In the document storage location information access management table 1810, a target folder 1811 indicates a folder managed by the document storage location information access management means. A user ID 1812 indicates an access right setting target user for whom whether or not to permit reference to the document storage location information of the target folder 1811 is set. A reference right flag 1813 indicates, as an access right, whether or not the user having the user ID 1812 can refer to the target folder 1811.

In this embodiment, the access right to document storage location information is managed in correspondence with each folder. However, the access right to document storage location information may be managed in correspondence with each folder or document.

For each folder managed in the document management server 100, the access right of each user to the document storage location information is registered in the document storage location information access management table 1810. It is possible to control acquisition of information by the document storage location information management unit 400 in accordance with the set access right.

### <Operation Example of Document Management Server in Document Management System of This Embodiment>

### (Example of Folder Content Display Procedure of This Embodiment)

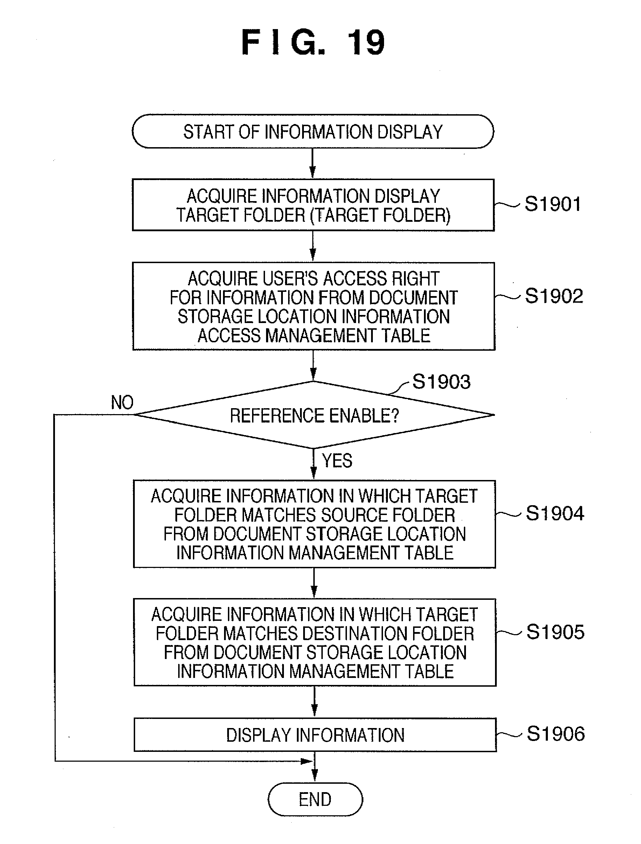

Fig. 19 is a flowchart of a process of displaying information when document storage location information access management is done. The information display process when document storage location information access management is done is executed in accordance with the following procedure.

When the user gives the instruction to open a desired folder, the user ID of the user who wants to display information, and the folder (target folder) designated by the user for displaying the information are acquired in step S1901. In step S1902, the reference right flag 1813 which has the target folder and user ID acquired in step S1901 in the target folder 1811 and user ID 1812, is acquired from the document storage location information access management table 1810.

In step S1903 corresponding to a determination means, it is determined whether or not the reference right flag 1813 indicates a reference enable state or a reference disable state. If the reference right flag 1813 indicates a reference enable state (YES in step S1903), the process advances to step S1904. If the reference right flag 1813 indicates a reference disable state (NO in step S1903), the process is ended without making the document storage location information management unit 400 acquire information of a folder or a document.

In step S1904, the document storage location information management unit 400 acquires document storage location information in which the target folder matches a source folder 413. In step S1905, the document storage location information management unit 400 acquires document storage location information in which the target folder matches a destination folder 414. The document storage location information acquired in steps S1904 and S1905 is displayed in S1906. Note that the flowchart in Fig. 19 can be combined with that in Fig. 4B.

### (Display Example of Access Management)

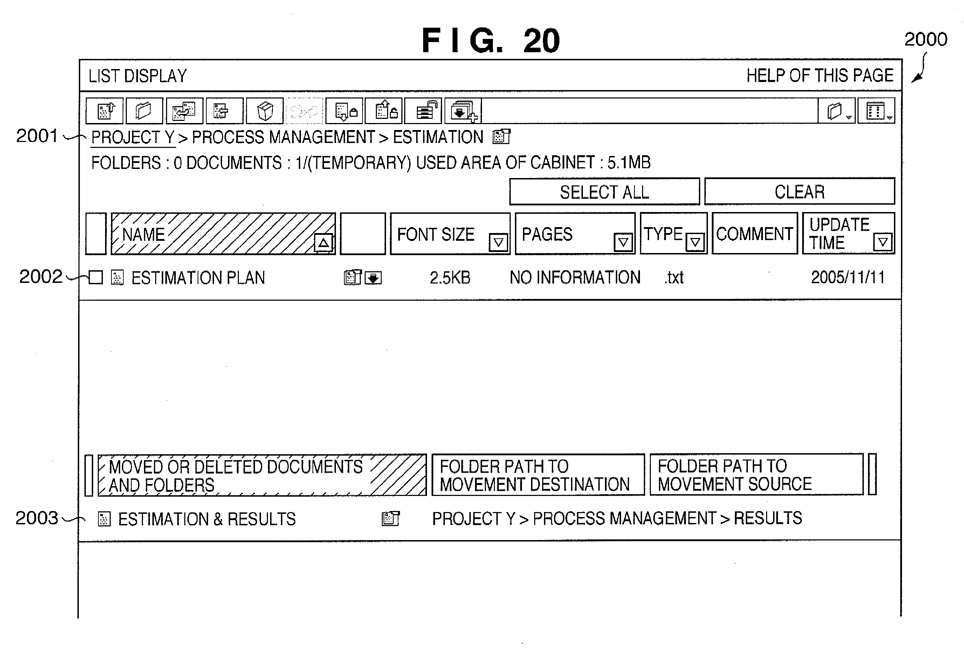

Fig. 20 shows a screen display example 2000 when information display is done in document storage location information access management. In particular, Fig. 20 shows a screen display example when a user who can refer to document storage location information executes displaying information.

In Fig. 20, the name of the opened folder, "estimation" is displayed in this example at an upper part 2001 of the screen. A list of documents or folders stored under the opened folder is displayed at a middle part 2002 of the screen. In this example, only "estimation plan" indicating the "estimation plan" document remaining under the "estimation" folder is displayed. A list of documents or folders which have been moved or deleted is displayed at a lower part 2003 of the screen.

The list of documents or folders which have been moved or deleted, which is displayed at the lower part 2003 of the screen, shows document storage location information acquired in step S1904 or S1905.

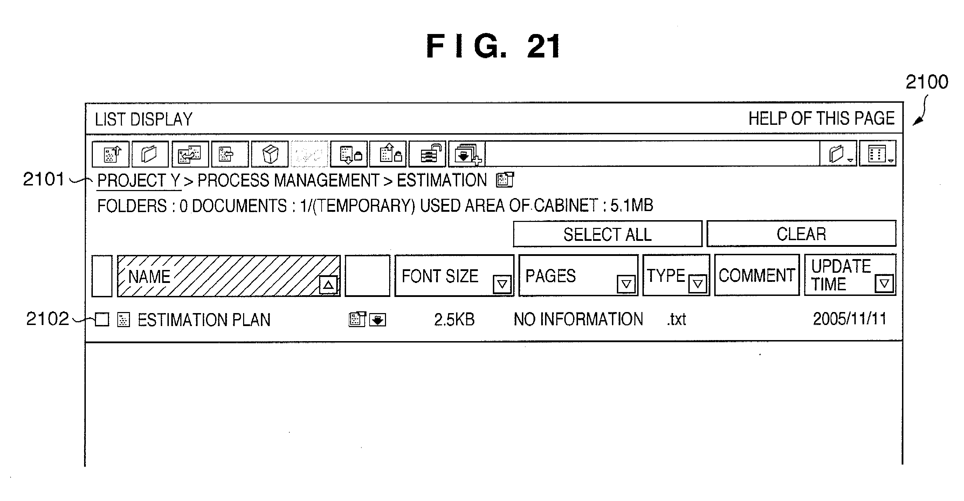

Fig. 21 shows a screen display example 2100 when information display is done in document storage location information access management. In particular, Fig. 21 shows a screen display example when a user who cannot refer to document storage location information executes displaying information.

In Fig. 21, the name of the opened folder, "estimation" is displayed in this example at an upper part 2101 of the screen. Only a list of documents or folders stored under the folder is displayed at a middle part 2102 of the screen.

Since no information determining that the user is able to refer to document storage location information is acquired in step S1903, no list of documents or folders which have been moved or deleted is displayed, like at the lower part 2103 of the screen in Fig. 20.

In Fig. 20 or 21, the list of documents or folders which are stored under the folder and the list of documents or folders which were once stored under the folder are displayed in one window. However, this is merely an example, and the display form is not limited to this. For example, the list of documents or folders which have been moved or deleted may be displayed separately in accordance with a folder designated by the user.

### [Third Embodiment]

In the first and second embodiments, since pieces of document storage location information are accumulated successively, the amount of storage only increases. In the third embodiment, to solve this problem, a document management apparatus capable of executing clear management to reset document storage location information will be described.

### <Arrangement Example of Document Management Server in Document Management System of This Embodiment>

The basic arrangement of a document management system and the arrangement of a document management server and client terminal are the same as in the first embodiment. Structural elements different from the first embodiment and additional elements will be described below.

### (Example of Document Storage Location Information Clear Management in Document Management Server of This Embodiment)

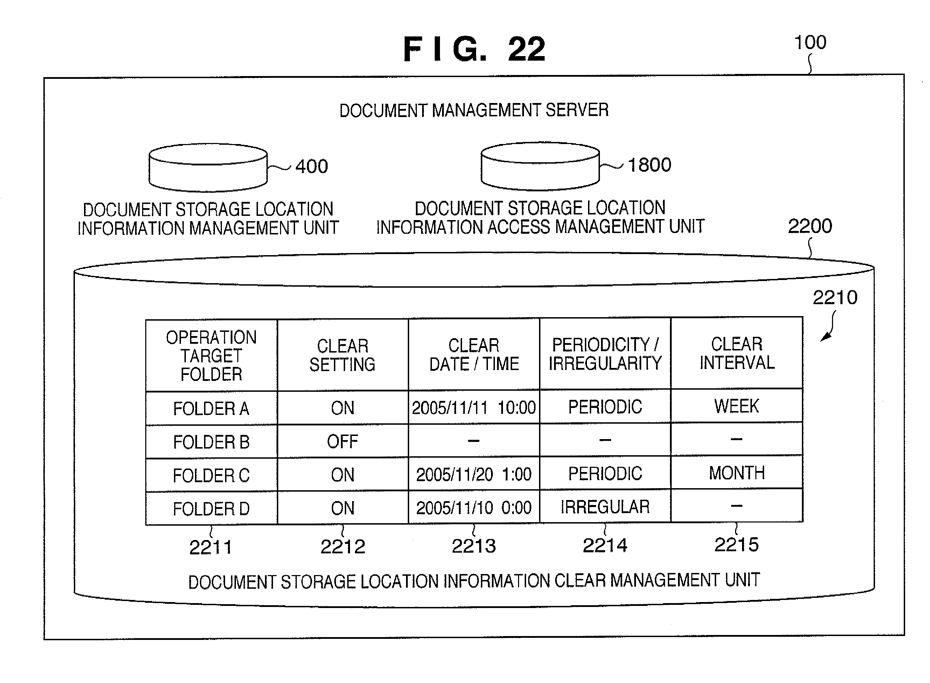

Fig. 22 is a view for explaining a document storage location information clear management unit which clears (resets) document storage location information according to this embodiment.

Fig. 22 shows the arrangement in a document management server 100. A document storage location information management unit 400 is the same as that described in the first embodiment. A document storage location information access management unit 1800 is the same as that described in the second embodiment. A document storage location information clear management unit 2200 manages the timing of clearing (resetting) of the document storage location information of each folder managed in the document management server 100.

The document storage location information clear management unit 2200 has a document storage location information clear management table 2210 corresponding to a third storage means. In document storage location information clear management table 2210, a target folder 2211 indicates a folder managed by the document storage location information clear management means. A clear setting flag 2212 indicates whether or not to clear (reset) the document storage location information. A clear date/time 2213 indicates a date/time to clear (reset) the document storage location information. A holding period may be stored instead of the clear date/time, and the elapse of the period may be determined. A periodicity flag 2214 indicates whether to periodically execute the clear (reset) process or irregularly execute the clear (reset) process as a one-off process. A clear interval 2215 indicates a periodic interval (once a day, once a week, once a month or once a year) when the periodicity flag 2214 is set to "periodic".

In this embodiment, clearing (resetting) of document storage location information is managed in correspondence with each folder. However, clearing (resetting) of document storage location information may be managed in correspondence with each folder or document.

### <Operation Example of Document Management Server in Document Management System of This Embodiment>

### (Example of Storage Location Information Clear Procedure of This Embodiment)

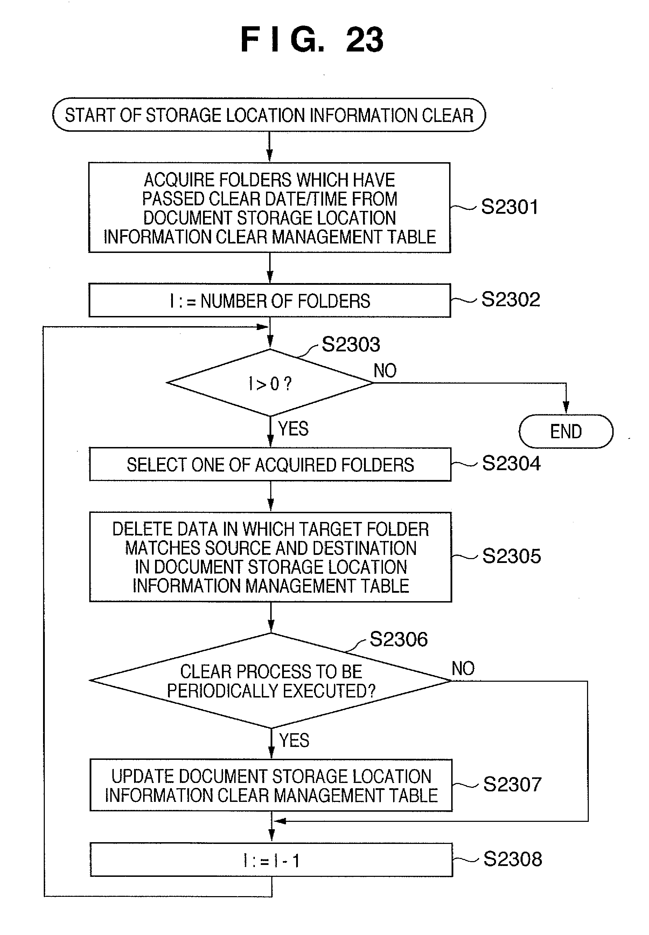

Fig. 23 is a flowchart of a process of causing the above-described document storage location information clear management unit 2200 to clear document storage location information. The document storage location information clear process is executed in accordance with the following procedure. The document storage location information clear process is assumed to be executed repeatedly or periodically.

In step S2301, the operation target folders 2211 that have passed the clear date/time 2213 are acquired from the document storage location information clear management table 2210.

The process in steps S2302 to S2308 is repeated as many times as the number of operation target folders acquired in step S2301. A variable I is used to control the repeating count which is equal to the number of operation target folders acquired in step S2301. In the repeating process, in step S2304, one of the acquired operation target folders 2211 is acquired as a target folder. In step S2305 corresponding to a history deletion means, the document storage location information management unit 400 deletes data in which the target folder acquired in step S2302 is set as a source folder 413 or a destination folder 414. In step S2306, the periodicity flag 2214 of data in which the target folder is set as the operation target folder 2211 in the document storage location information clear management table 2210 is referred. If the "periodic" clear process is set (YES in step S2306), the clear date/time 2213 is updated in accordance with the value set as the clear interval 2215 in step S2307.

The above process allows clear (reset) management of document storage location information.

The first to third embodiments have independently been described. However, any combination of these embodiments can also easily be realized and incorporated in the present invention.

In the above embodiments, the document management server 100 exclusively manages document storage location information and the like. However, the management may be distributed to, for example, the client terminals, and such an arrangement is also incorporated in the present invention.

The present invention is also applicable to a system or integrated apparatus including a plurality of devices (for example, host computer, interface device, and printer) or an apparatus including a single device.

The object of the present invention is achieved even by supplying a storage medium (or recording medium) which records software program codes for implementing the functions of the above-described embodiments to the system or apparatus. The program codes stored in the storage medium cause the computer (or CPU or MPU) of the system or apparatus to function as a means for executing the processes.

In this case, the program codes read out from the storage medium are constituent elements to implement the functions of the above-described embodiments by themselves. Hence, the storage medium which stores the program codes constitutes the present invention.

An operation system (OS) running on the computer partially or wholly executes actual processing based on the instructions of the program codes. The present invention also incorporates a case wherein the functions of the above-described embodiments are implemented by such a process.

The program codes read out from the storage medium may be written in the memory of a function expansion card inserted into the computer or a function expansion unit connected to the computer. Then, the CPU of the function expansion card or function expansion unit partially or wholly executes actual processing based on the instructions of the program codes. The present invention also incorporates a case wherein the functions of the above-described embodiments are implemented by such a process.

When the present invention is applied to the above-mentioned storage medium, the storage medium stores the program codes corresponding to the flowcharts described earlier.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A document management apparatus (100) for storing documents in folders having a hierarchical structure and managing the stored documents, each document being in the form of an electronic file accessible from a plurality of terminals (100-1 ... 100-N) through a network (102), **characterized by** comprising:
history holding means (400, 410, 1800, 1810, 2200, 2210) for holding a history of operations including a moving operation or a deleting operation performed on such a document contained in such a folder or on such a folder contained in another such folder; and
history display means (700, 800, 1100, 1400, 1700, 2000, 2100) operable, in the case of a folder that previously contained such a moved or deleted document or folder being opened by one of the plurality of terminals (101-1 ... 100-N), to employ said history of operations held by said history holding means (400, 410, 1800, 1810, 2200, 2210) to cause the opening terminal to display information about one or more operations performed on the previously contained document or folder.

2. An apparatus (100) according to claim 1, **characterized in that** said history holding means (400, 410) has first storage means (410) for storing at least an identifier (412) to specify the document or folder, a source folder (413) in which the document or folder was once stored, and a destination folder (414) in which the document or folder is stored.

3. An apparatus (100) according to claim 2, **characterized in that** said first storage means (410) is operable to further store a kind of operation (411) representing movement or deletion, an identifier of a user (415) instructing the operation, and an operating time (416).

4. An apparatus (100) according to claim 2 or claim 3, **characterized in that** said history holding means (400, 410) further comprises:
acquisition means for acquiring (S502, S902) a history of operations of the document or folder having the same identifier (412) as that of the moved or deleted document or folder from said first storage means (410); and
history update means for updating (S506, S906) the history of operations of the document or folder acquired by said acquisition means.

5. An apparatus according to claim 4, **characterized in that**, when the operation is movement of the document or folder, said history update means is operable to update (S506) the destination folder (414) of the acquired document or folder, and when the operation is deletion of the document or folder, said history update means is operable to update (S906) the kind of operation (411) and destination folder (414) of the acquired document or folder.

6. An apparatus according to any preceding claim, **characterized in that**, when a target of the operation is a folder, said history holding means (400, 410) comprises repeating means for recursively holding (S1204-S1207, S1210-S1215, S1504-S1507, S1510-S1515) a history of operations corresponding to the same operation, for a document or a lower level folder once stored in the target folder.

7. An apparatus according to any preceding claim, **characterized in that** said history display means (1400, 1700) is operable to cause the opening terminal to display a history of operations of the document or the lower level folder stored in the opened folder based on the history of operations held in the history holding means (400, 410, 1800, 1810, 2200, 2210).

8. An apparatus according to any preceding claim, **characterized by** further comprising determination means for determining (S1903) an access right (1813) of a user (1812) for the document or folder (1811), and said history display means (2000, 2100) operable to display (S410) a history of operations of a document or folder determined to be accessible.

9. An apparatus according to claim 8, **characterized by** further comprising:
second storage means (1810) for rewritably storing an access right (1813) of the user for the document or folder; and
wherein said determination means is operable to determine (S1903) the access right of a user for the document or folder by referring to the access right (1813) stored in said second storage means (1810).

10. An apparatus according to any preceding claim, **characterized by** further comprising:
third storage means (2210) for storing a holding period (2215) of the history of operations of a document or folder; and
history deleting means (S2304) for deleting, when the holding period (2215) stored in said third storage means (2210) has expired, the history of operations of the document or folder for which the holding period (2215) has expired.

11. A document management system including a plurality of terminals (100-1...100-N) connected through a network (102), and a document management apparatus (100) according to any preceding claim.

12. A document management method of storing documents in folders having a hierarchical structure and managing the stored documents, each document being in the form of an electronic file accessible from a plurality of terminals (100-1...100-N) through a network (102), the method **characterized by** comprising the steps of:
holding (S501, S506, S901, S906, S1201, S1206, S1213-S1214, S1501, S1506, S1513-1514, S2305, S2307) a history of operations including a moving operation or a deleting operation performed on such a document contained in such a folder or on such a folder contained in another such folder; and
displaying (S401-S410, S1901-1906), when one of the plurality of terminals opens a folder that previously contained such a moved or deleted document or folder, information about one or more operations performed on the previously contained document or folder, based on the held history of operations.

13. A method according to claim 12, **characterized in that** the history holding step further comprises the steps of:
acquiring (S502, S902) a history of operations of the document or folder having an identifier the same as that of the moved or deleted document or folder from first storage means (410) for storing at least an identifier to specify the document or folder, a source folder in which the document or folder was once stored, and a destination folder in which the document or folder is stored; and
updating (S506, S906) the history of operations of the acquired document or folder.

14. A method according to claim 12 or 13, **characterized in that** in the history displaying step (S401-S410, S1901-S1906), a history of operations of the document or lower level folder stored in the opened folder is displayed on the opening terminal based on the held history of operations.

15. A method according to any one of claims 12 to 14, **characterized by** further comprising a step of determining (S1903) an access right of a user for the document or folder by referring to the access right (1813) stored in second storage means (1810) for rewritably storing the access right (1813) of the user (1812) for the document or folder (1811),
wherein in the history displaying step (S401-S410, S1901-S1906), a history of operations of a document or folder determined to be accessible is displayed.

16. A method according to any one of claims 12 to 15, **characterized by** further comprising a step of deleting (S2304), when a holding period (2215), stored in third storage means (2210) for storing a holding period (2215) of the history of operations of a document or folder (2211), has expired, the history of operations of the document or folder (2211) for which the holding period (2215) has expired.

17. A program which, when run on a computer, causes the computer to perform a method according to any one of claims 12 to 17.

18. A computer-readable storage medium storing a program according to claim 17.
